# EUROPÄISCHE PATENTSCHRIFT

(11) **EP 2 917 984 B1**
(45) Veröffentlichungstag und Bekanntmachung des Hinweises auf die Patenterteilung: **27.12.2017**
(21) Anmeldenummer: 13792618.4
(22) Anmeldetag: 06.11.2013
(51) Int. Cl.: H01R 39/08

(54) **SCHLEIFRINGKÖRPER, SCHLEIFRINGÜBERTRAGER UND WINDENERGIEANLAGE**
SLIP RING BODY, SLIP RING TRANSMITTER AND WIND ENERGY PLANT
CORPS DE BAGUE COLLECTRICE, TRANSMETTEUR À BAGUE COLLECTRICE ET INSTALLATION D'ÉNERGIE ÉOLIENNE

(30) Priorität: 07.11.2012 DE 102012220293
(43) Veröffentlichungstag der Anmeldung: 16.09.2015
(73) Patentinhaber: Wobben Properties GmbH, 26607 Aurich (DE)
(72) Erfinder: GERDES, Frank, 26629 Großefehn (DE); JANßEN, Aike, 26721 Emden (DE); HALLER, Matthias, 26603 Aurich (DE)
(74) Vertreter: Eisenführ Speiser
(86) Internationale Anmeldenummer: PCT/EP2013/073190
(87) Internationale Veröffentlichungsnummer: WO 2014/072355

(56) Entgegenhaltungen:
- EP-A2- 2 019 460
- DE-A1- 10 106 119
- DE-U1- 29 800 281
- US-A- 2 436 949
- US-A- 3 042 998
- US-A- 4 871 935

## Beschreibung

Die vorliegende Erfindung betrifft einen Schleifringübertrager sowie Komponenten eines solchen, einschließlich eines Schleifringkörpers, einer Schleifringwelle, eines Isolierkörpers und eines Schleifrings. Weiterhin betrifft die vorliegende Erfindung eine mit einem Schleifringübertrager ausgestattete Windenergieanlage.

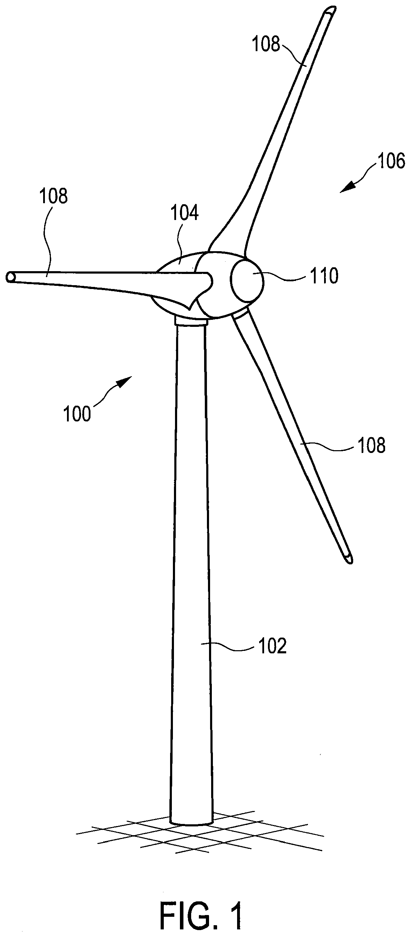

Schleifringübertrager einer Windenergieanlage sind allgemein bekannt. Sie übertragen üblicherweise elektrische Signale von der Gondel einer Windenergieanlage zum aerodynamischen Rotor der Windenergieanlage, der sich im Betrieb relativ zur Gondel bzw. zum Rest der Gondel dreht. Hierbei werden sowohl große Leistungen übertragen, die beispielsweise für Verstellmotoren oder ggf. Heizungen benötigt werden, als auch Daten wie beispielsweise Steuersignale oder Messsignale. Eine solche Windenergieanlage ist im Übrigen schematisch in der Fig. 1 gezeigt.

Ein herkömmlicher Schleifringübertrager ist grundsätzlich so aufgebaut, dass für jedes zu übertragende Signale, also Daten oder Leistungssignale, entsprechende Leitungen vorgesehen sind. Die Leitungen sind dabei jeweils mit wenigstens einem elektrisch leitenden Schleifring elektrisch verbunden, um darüber das betreffende elektrische Signal auf eine entsprechende auf dem Schleifring schleifende Bürste zu übertragen. Die Bürsten sind somit an einem Teil des Schleifringübertragers angeordnet, der sich relativ zu einem weiteren die Schleifringe tragenden Abschnitt des Schleifringübertragers dreht bzw. umgekehrt.

Für die Schleifringe und korrespondierenden Bürsten sind verschiedene Techniken bekannt, wie beispielsweise die Verwendung einer Kohlebürste, bei der eine Art Kohlestück auf dem Schleifring schleift. Als weitere Variante kommt eine so genannte Golddraht-Technik in Betracht, die mit Gold beschichtete Leitungsenden aufweist, die auf einem Schleifring schleifen. Ebenfalls ist eine so genannte Multibrush-Technik bekannt, die auch als "Vieldrahtschleifer" bezeichnet wird, bei der die auf dem Schleifring schleifende Bürste eine Vielzahl feiner Drähte aufweist, die etwa seitlich an dem Schleifring anliegen und schleifen.

Die besagten Leitungen, die mit den Schleifringen verbunden sind, werden in einer Hohlwelle geführt, auf der die Schleifringe sitzen. Von dem Innenraum dieser Hohlwelle aus wird dann die jeweilige Leitung mit ihrem jeweiligen Schleifring verbunden. Dazu wird sie isoliert durch den Mantel der Hohlwelle zu dem Schleifring geführt und mit diesem kontaktiert. Die Schleifringe sind ebenfalls untereinander elektrisch isoliert und dabei auch gegen die Hohlwelle elektrisch isoliert. Es wird zudem dafür gesorgt, dass jeder Schleifring fest auf der Hohlwelle sitzt und sich mit ihr mit dreht.

Die Größe, nämlich insbesondere axiale Ausdehnung jedes Schleifrings hängt von seiner Aufgabe ab, also insbesondere davon, was für Signale und wie viel Leistung übertragen werden soll. Entsprechend werden diese Schleifringe, die Zuleitungen und die elektrische Verbindung an jeden Anwendungsfall individuell angepasst. Das Gleiche gilt für die Hohlwelle, die entsprechend lang ausgebildet ist, um alle benötigten Schleifringe aufnehmen zu können.

Nachteilig bei solchen bekannten Schleifringübertragern ist somit u.a., dass sie für jeden neuen Anwendungsfall neu entworfen werden müssen. Dabei entsteht nicht nur ein höherer Entwicklungsaufwand mit entsprechend hohen Kosten, sondern es entsteht auch zusätzlicher Aufwand für die Überprüfung und den Praxistest der Schleifringübertrager. Die jeweils individuell zu entwickelnden und zu fertigenden Elemente können Probleme der Haltbarkeit mit sich bringen und es liegen bei jeder Neuentwicklung zunächst keinerlei Erfahrungswerte über Langlebigkeit der neuen Elemente vor.

Das Deutsche Patent- und Markenamt hat in der Prioritätsanmeldung zu vorliegender Anmeldung folgenden Stand der Technik recherchiert: DE 201 16 756 U1, DE 29 800 281 U1, DE 20 58 343 A, US 3 686 514 A, EP 2 019 460 A2, WO 96/14 678 A1, WO 2008/042 183 A2 und JP H06-132 058 A. US-2 436 949 offenbart die Merkmale des Oberbegriffs des Anspruchs 1.

Der vorliegenden Erfindung liegt somit die Aufgabe zugrunde, wenigstens eines der oben genannten Probleme zu adressieren. Insbesondere soll für einen Schleifringübertrager eine Lösung vorgeschlagen werden, die es ermöglicht, Schleifringübertrager für unterschiedliche Systeme, insbesondere für unterschiedliche Windenergieanlagen mit möglichst wenig individuellen Elementen oder Entwicklungsschritten zu schaffen. Zumindest soll eine alternative Lösung vorgeschlagen werden.

Erfindungsgemäß wird ein Schleifringkörper gemäß Anspruch 1 vorgeschlagen. Dieser Schleifringkörper ist als Teil eines Schleifringübertragers zum Übertragen elektrischer Signale zwischen einem stehenden und einem um eine Drehachse drehenden Teil vorgesehen. Der Schleifringkörper umfasst wenigstens einen Schleifring zum Übertragen eines der elektrischen Signale zwischen dem Schleifring und wenigstens einem darauf schleifenden Schleifelement, insbesondere einer so genannten Bürste. Weiterhin umfasst der Schleifringkörper eine Schleifringwelle zum Befestigen des wenigstens einen Schleifrings darauf.

Erfindungsgemäß weist die Schleifringwelle ein Profil auf und der Isolierkörper weist ein an das Profil der Schleifringwelle angepasstes Gegenprofil auf. Erfindungsgemäß sind dieses Profil und das Gegenprofil so ausgebildet, dass der Isolierkörper mit seinem Gegenprofil axial entlang des Profils der Schleifringwelle auf die Schleifringwelle aufgeschoben werden kann. Dabei greifen das Profil und das Gegenprofil so ineinander, dass sich eine im Wesentlichen drehfeste Verbindung ergibt. Je nach Passung können die Isolierkörper leicht mit leichtem Spiel oder stramm aufgeschoben werden, so dass sie spielfrei aufsitzen. Vorzugsweise kann eine stramme Passung auch so vorgenommen werden, dass das Profil und Gegenprofil nicht über das gesamte Profil über eine stramme Passung verfügen, sondern lediglich punktuell, indem beispielsweise entsprechende Erhöhungsstege in axialer Richtung an dem Isolierkörper vorgesehen sind. Diese können ggf. auf einfache Weise angepasst werden, sollten sie sich als zu groß herausstellen, oder der Isolierkörper gibt im Bereich solcher Stege oder anderer Ausgleichserhöhungen etwas nach, um dadurch eine stramme Verbindung zwischen Schleifringwelle und Isolierkörper zu erreichen.

Zur Vereinfachung der Darstellung kann der Schleifringkörper, der die Schleifringwelle mit wenigstens einem Schleifring umfasst, als drehender Teil des Schleifringübertragers angesehen werden. Das auf dem wenigstens einen Schleifring schleifende Schleifelement, insbesondere eine so genannte Bürste, ist entsprechend an dem stehenden Teil des Schleifringübertragers befestigt. Bei der Anwendung ist es jedoch letztlich irrelevant, ob in absoluter Betrachtung der stehende Teil steht und der drehende Teil dreht oder umgekehrt, so lange nur der drehende Teil relativ zum stehenden Teil dreht. Vorzugsweise ist aber vorgesehen, dass der Schleifringkörper absolut gesehen, also insbesondere mit Bezug auf einen festen Gegenstand auf der Erde, dreht. Insbesondere bei Verwendung in einer Horizontalachsenwindenergieanlage weist der Schleifringübertrager und damit die Schleifringwelle eine im Wesentlichen waagerechte Drehachse auf und entsprechend müssten sämtliche Elemente des Schleifringkörpers für ein ständiges Drehen ausgelegt sein. Im Falle einer Langsamdrehung spielen Fliehkräfte kaum eine Rolle. Ein ständiger Wechsel der Gewichtskraft auf die Elemente, der sich durch eine Drehung um eine im Wesentlichen horizontale Drehachse ergibt, sollte aber berücksichtigt werden.

Die vorgeschlagene Schleifringwelle weist über ihren Umfang verteilte Führungskanäle zum Aufnehmen elektrischer Leitungen zum elektrischen Anschließen des wenigstens einen Schleifringes auf. Somit wird nun vorgeschlagen, dass die elektrischen Leitungen, die die elektrischen Signale führen sollen, nicht mehr oder nicht mehr vollständig gebündelt im Inneren einer als Hohlwelle ausgebildeten Schleifringwelle geführt werden, sondern weiter außen in entsprechenden Führungskanälen, vorzugsweise so, dass jeder Führungskanal jeweils eine elektrische Leitung für ein elektrisches Signal aufnimmt. Dadurch können die elektrischen Leitungen zielgerichtet in der Schleifringwelle verlegt werden und befinden sich dadurch außerdem näher am äußeren Umfang der Schleifringwelle und damit näher an dem jeweiligen Schleifring, mit dem sie elektrisch verbunden werden. Durch die Anordnung der über den Umfang verteilten Führungskanäle steht auch ein größeres Platzangebot zur Verfügung, im Vergleich zur Anordnung von elektrischen Leitungen im Bereich der Drehachse. Je weiter die Führungskanäle zum äußeren Umfang der Schleifringwelle reichen, um so größer ist das grundsätzlich vorhandene Platzangebot hierfür.

Durch über den Umfang verteilte Führungskanäle und damit entsprechend verteilte elektrische Leitungen kann auch eine bessere Wärmeverteilung und damit Wärmeabfuhr erreicht werden.

Vorzugsweise werden die Schleifringwelle und/oder der wenigstens eine Schleifring durch ein Strangpressverfahren oder Strangziehverfahren hergestellt. Hierdurch können lange Profile mit in axialer Richtung gleichbleibenden Querschnitten erzeugt werden, die anschließend auf die gewünschte Länge gekürzt werden können. So sind auf einfache Weise viele im Profil gleiche aber in der Länge unterschiedliche Elemente herstellbar. Es kann eine Vielzahl an Schleifringen hergestellt werden, die entsprechend nur noch auf die gewünschte Länge gekürzt werden müssen. Außerdem lässt sich eine Schleifringwelle mit mehreren Führungskanälen auf vergleichsweise einfache Art und Weise herstellen, sofern die entsprechende Vorrichtung zum Herstellen für viele im Querschnitt gleiche Schleifringwellen verwendet wird. Hierbei hat nämlich das Herstellen und Vorbereiten einer entsprechenden Herstellvorrichtung einen großen Anteil am Aufwand und an den Kosten der Herstellung, die sich jedoch verteilen, wenn viele gleichartige Gegenstände hergestellt werden. Die somit vergleichsweise komplexe Form einer Schleifringwelle ist dadurch dennoch mit verhältnismäßig geringem Aufwand herstellbar. Die Führungskanäle können hierbei unmittelbar beim Strangpressen oder Strangziehen mit in diese Welle eingearbeitet werden.

Gemäß einer Ausführungsform wird vorgeschlagen, dass die Schleifringwelle sich radial nach außen erstreckende Streben mit jeweils dazwischen liegenden Nuten aufweist, wobei insbesondere drei, vorzugsweise wenigstens sechs Streben vorgesehen sind, die insbesondere identisch sind und/oder gleichmäßig in Umfangsrichtung verteilt sind. Vorzugsweise ist die Welle im Querschnitt, also in einem Schnitt quer zur Drehachse, etwa sternförmig ausgebildet

Hierdurch ist eine stabile, insbesondere auch steife und drehsteife Welle vorsehbar, die mehrere Leitungen, insbesondere Leitungen zur Leistungsübertragung, aufweist. Für die Übertragung einer elektrischen Leistung eines dreiphasigen Systems können entsprechend drei Leitungen in der Welle geführt werden, wovon jede einzelne Leitung in jeweils einem Führungskanal geführt wird. Bei sechs Streben und entsprechend sechs Nuten sind somit sechs Führungskanäle vorhanden, die entsprechend sechs Leitungen, also beispielsweise zweimal drei Leitungen eines Dreiphasensystems führen können.

Besonders günstig ist hierbei eine sternförmige, insbesondere symmetrisch sternförmige Ausgestaltung, die diese Nuten und Streben aufweisen kann. Durch Verwendung einer Symmetrie können etwaige Fehlinstallationen vermieden werden. Die Sternförmigkeit bezieht sich dabei auf eine Querschnittsansicht der Schleifringwelle, die auch vereinfacht als Welle bezeichnet wird, gemäß einem Schnitt quer zur Drehachse.

Gemäß einer weiteren Ausgestaltung wird vorgeschlagen, dass die Schleifringwelle zum Führen weiterer elektrischer Leitungen eine Durchgangsbohrung mit einer mit der Drehachse übereinstimmenden Längsachse aufweist. Eine solche Durchgangsbohrung kann dabei auch als Zentralrohr bezeichnet werden. Sie braucht nicht durch einen Bohrvorgang hergestellt worden zu sein. Hierdurch wird eine Ausführung eines Schleifringübertragers ermöglicht, bei der in einem solchen Zentralrohr Datenleitungen zum Übertragen von Daten vom drehenden zum stehenden Teil und umgekehrt vorgesehen sind. In den Führungskanälen, die insbesondere durch entsprechende Nuten in der Schleifringwelle vorgesehen sind, können elektrische Leitungen für Leistungssignale übertragen werden. Diese beiden grundsätzlichen Leitungsarten sind somit voneinander getrennt. Die in dem Zentralrohr verlegten Datenleitungen können durch diese Schleifringwelle in Längsrichtung vollständig hindurchgeführt werden, nämlich zu einem Informations- oder Datenteil des Schleifringübertragers, in dem Daten zwischen stehendem und drehendem Teil übertragen werden. Die in den Führungskanälen angeordneten Leitungen führen hingegen nicht vollständig durch die Schleifringwelle in axialer Richtung hindurch, sondern werden jeweils zu einem Schleifring nach außen geführt und dort mit diesem elektrisch leitend verbunden. Eine solche Schleifringwelle ist somit auch Teil eines Leistungsteils des Schleifringübertragers und hierdurch ist auf einfache und zweckmäßige Weise eine sinnvolle Trennung von Leistungsteil und Datenteil vorsehbar. Diese Trennung betrifft somit nicht nur die Anordnung der jeweiligen Schleifringe und kontaktierenden Bürsten, sondern auch eine getrennte Führung der entsprechenden Leitungen in der Schleifringwelle, die einen Teil des Leistungsteils bildet.

Der Vorteil einer solchen Trennung liegt auch in einer geringen elektromagnetischen Beeinflussung der Datenleitungen durch die Leistungsleitungen.

Gemäß wenigstens einer weiteren Ausgestaltung wird für den Schleifringkörper vorgeschlagen, dass wenigstens ein auf die Schleifringwelle aufschiebbarer Isolierkörper vorgesehen ist, um zwei Schleifringe gegeneinander elektrisch zu isolieren und/oder um einen Schleifring gegen die Schleifringwelle elektrisch zu isolieren und/oder um wenigstens eine elektrische oder wenigstens eine der elektrischen Leitungen isoliert in den Führungskanälen zu führen.

Somit wird ein, vorzugsweise mehrere aufschiebbare Isolierkörper vorgesehen. Diese können auf die Schleifringwelle aufgeschoben werden und dadurch ist ein modularer Aufbau erreichbar. Die Isolierkörper sind also an die Schleifringwelle, die über ihren Umfang verteilte Führungskanäle aufweist, angepasst, so dass sie aufgeschoben werden können. Zum Isolieren zweier Schleifringe untereinander weist der Isolierkörper beispielsweise einen entsprechenden umlaufenden Abschnitt auf, wie beispielsweise einen umlaufenden Steg oder Scheibenabschnitt, der bestimmungsgemäß in axialer Richtung zwischen zwei Schleifringen angeordnet wird. Die betreffenden beiden Schleifringe werden dadurch gegeneinander isoliert und können unterschiedliche elektrische Potentiale führen.

Zum Isolieren der Schleifringwelle gegen den wenigstens einen Schleifring sind die Isolierkörper so ausgebildet, dass sie in radialer Richtung zwischen der Schleifringwelle und dem wenigstens einen Schleifring bestimmungsgemäß angeordnet werden. Insbesondere können die Isolierkörper auf die Welle aufgeschoben werden und darüber, also mit etwas größerem Durchmesser, können dann die Schleifringe auf die Isolierkörper aufgeschoben werden.

Ein Isolierkörper kann dabei einen solchen Isolierabschnitt zum Isolieren in radialer Richtung, also zwischen Welle und Schleifring, aufweisen und er kann zusätzlich den beschriebenen umlaufenden Abschnitt zum Isolieren in axialer Richtung aufweisen.

Beispielsweise können unterschiedliche Isolierkörper vorgesehen sein, wie beispielsweise einer mit umlaufender Erhöhung zur Isolierung in axialer Richtung und ein weiterer ohne eine solche Isolierung. Durch entsprechendes Zusammensetzen solcher oder anderer unterschiedlicher Isolierkörper kann die jeweils konkrete Ausgestaltung des Schleifringkörpers und damit im Ergebnis des Schleifringübertragers realisiert werden. Es werden hierfür einfach die entsprechenden Isolierkörper und die entsprechenden Schleifringe sukzessive auf die Schleifringwelle aufgeschoben. Hierdurch können allein durch unterschiedliche Zusammensetzung der Isolierkörper und Schleifringe unterschiedliche Schleifringkörper und damit im Ergebnis unterschiedliche Schleifringübertrager hergestellt werden.

Zum Isolieren der elektrischen Leitungen gegen die Schleifringwelle ist der Isolierkörper so ausgebildet, dass sich Kanalabschnitte, insbesondere hohle Kanalabschnitte in die Führungskanäle legen, insbesondere an diese angepasst sind. In diese Kanalabschnitte können dann die entsprechenden Leitungen eingelegt werden. Insbesondere sind solche Leitungskanalabschnitte der Isolierkörper so an die Führungskanäle der Schleifringwelle angepasst, dass sie zudem eine Führungsfunktion beim Aufstecken der Isolierkörper auf die Schleifringwelle übernehmen können. Auch können die Isolierkörper dadurch in Drehrichtung auf der Schleifringwelle fixiert werden.

Gemäß einer Ausgestaltung wird vorgeschlagen, dass mehrere Isolierkörper mit gleichen Querschnitten aber unterschiedlicher Länge bzw. unterschiedlicher axialer Ausdehnung vorgesehen sind und/oder dass mehrere Isolierkörper zum passgenauen Aneinandersetzen auf der Schleifringwelle vorgesehen sind. Schleifringe für die Übertragung unterschiedlicher Leistung unterscheiden sich, sofern sie für denselben Schleifringkörper vorgesehen sind, im Wesentlichen durch ihre Länge bzw. axiale Ausdehnung. Entsprechend muss auch ein zwischen Schleifringwelle und Schleifring angeordneter Isolierkörper an die entsprechende Länge des Schleifrings angepasst sein. Durch Verwendung mehrerer Isolierkörper, insbesondere mehrerer Isolierkörper gleicher Länge, also gleicher axialer Ausdehnung, lassen sich unterschiedliche Längen durch unterschiedlich viele, hintereinander auf die Schleifringwelle aufgeschobener Isolierkörper erreichen. Dabei können auch mehrere Schleifringe zu einem zusammengesetzt werden, wobei aber bei den Schleifringen das Problem besteht, dass diese untereinander kontaktiert werden müssen. Insoweit kann die Verwendung unterschiedlich langer, einstückiger Schleifringe sinnvoll sein und wird vorgeschlagen, wohingegen das Zusammensetzen mehrerer korrespondierender Isolierkörper vorteilhaft ist.

Zur Kontaktierung eines Schleifringes wird insbesondere eine in einem Isolierkanalabschnitt des Isolierkörpers geführte elektrische Leitung durch eine Öffnung des Isolierkörpers in seinem Außenmantel zum Schleifring geführt und dort kontaktiert. Dabei kann der Isolierkörper mehrere Leitungskanalabschnitte, wie beispielsweise drei oder sechs Leitungskanalabschnitte entsprechend der Anzahl Führungskanäle in der Schleifringwelle aufweisen. Vorzugsweise weist aber ein Außenmantel des Isolierkörpers nur eine Öffnung auf bzw. nur zu einem Leitungskanalabschnitt weist der Isolierkörper eine Öffnung auf. Ist der Isolierkörper - und entsprechend auch im Wesentlichen die Schleifringwelle - sternförmig gleichmäßig aufgebaut, können identische Isolierkörper mit Öffnungen in ihrem Mantel an identischer Stelle dennoch auf der Schleifringwelle so zusammengesetzt werden, dass ihre Öffnungen dann zu unterschiedlichen Führungskanälen führen.

Günstig ist eine Gestalt, bei der die Isolierkörper gestufte Kanten zum Ansetzen an korrespondierend gestufte Kanten eines benachbarten Isolierkörpers aufweisen. So kann ein Isolierkörper zu einem zu einer Seite benachbarten Isolierkörper mit einer vorstehenden Kante überlappen, während er zu seiner anderen Seite, in axialer Richtung gesehen, einem benachbarten Isolierkörper eine Überlappung ermöglicht. Hierdurch wird insbesondere eine Isolierung an diesen Stoßbereichen zwischen zwei Isolierkörpern verbessert. Es kann vermieden werden, dass versehentlich eine elektrisch leitfähige Verbindung zwischen zwei benachbarten Isolierkörpern entsteht oder entstehen kann. Durch diese Überlappung wird ein offener Spalt zwischen zwei benachbarten Isolierkörpern auch für den Fall vermieden, dass diese nicht vollständig und präzise aneinander sitzen. Durch eine passgenaue Gestalt jedes dieser Isolierkörper zum passgenauen Aufschieben auf die Schleifringwelle werden benachbarte Isolierkörper auch an den beschriebenen Überlappungsstellen insbesondere vollständig an ihrer Ansatzkannte bestimmungsgemäß und mit vorgesehener Überlappung aneinander gesetzt. Die Führung jedes Isolierkörpers auf der Schleifringwelle, nämlich auf dem Profil der Schleifringwelle, gewährleistet auch eine Führung beim Aneinander- bzw. Zusammensetzen benachbarter Isolierkörper, auch in Bezug auf die gestuften Kanten.

Vorzugsweise ist wenigstens einer der Isolierkörper als Grenzisolierkörper zum elektrischen Isolieren wenigstens eines Schleifrings in radialer und in axialer Richtung vorgesehen. Außerdem oder alternativ ist wenigstens einer der Isolierkörper als Distanzisolierkörper zum elektrischen Isolieren wenigstens eines Schleifrings nur in radialer Richtung vorgesehen. Ein solcher Distanzisolierkörper ist insbesondere in axialer Richtung zwischen zwei Grenzisolierkörpern angeordnet, sofern zwei Grenzisolierkörper vorhanden sind. Insbesondere kann ein Schleifring zwischen zwei Grenzisolierkörpern aufgenommen werden, diesen nämlich axial zu beide Seiten isolieren und radial zur Schleifringwelle hin isolieren. Je nach Länge, also je nach axialer Ausdehnung des Schleifrings kann ein oder können mehrere Distanzisolierkörper zwischen den beiden Grenzisolierkörpern vorgesehen sein.

Gemäß einer Ausführungsform können auch Isolierkörper vorgesehen sein, die ausschließlich in axialer Richtung isolieren. Zur gemeinsamen vollständigen radialen und axialen Isolierung eines Schleifrings können dann beispielsweise zwei solche nur axial isolierende Isolierkörper zusammen mit einer entsprechenden Anzahl Distanzisolierkörper verwendet werden.

Somit können Schleifringe unterschiedlicher axialer Ausdehnung vorteilhaft isoliert werden, wobei nur wenige unterschiedliche Isolierkörper benötigt werden. Es wird somit eine modulare Lösung geschaffen. Durch Verwendung unterschiedlich vieler Distanzringe ergibt sich eine Skalierbarkeit, bei der jeweils ein Isolierbereich mit der an den Schleifring angepassten notwendigen Länge auf einfache Weise geschaffen wird.

Durch die beschriebenen umlaufenden Stufen bzw. die beschriebene eine umlaufende Stufe an Ansatzkanten eines Isolierkörpers zum Ansetzen an seinem benachbarten Isolierkörper werden zudem Kriechstrecken für Kriechströme vermieden und somit eine gute Isolierung geschaffen. Das wird selbst bei dem Aneinanderstecken mehrerer Isolierkörper für die Isolierung eines vergleichsweise langen Schleifrings geschaffen.

Auf Mantelflächen bzw. einer Mantelfläche jedes Isolierkörpers können kleine Erhöhungen, insbesondere in Gestalt flacher axial ausgerichteter Stege, vorgesehen sein, die bei bestimmungsgemäßer Verwendung von innen einen aufgesetzten Schleifring berühren und dadurch zu einem festen Sitz des Schleifringes auf dem Isolierkörper führen. Somit ist ein strammer Sitz des Schleifrings auf dem Isolierkörper erreichbar, ohne dass eine entsprechend stramme Passung zwischen Isolierkörper und Schleifring vorgesehen sein muss.

Gemäß einer noch weiteren Ausgestaltung wird vorgeschlagen, dass mehrere Isolierkörper auf der Schleifringwelle zusammengesetzt sind und gemeinsam wenigstens einen axialen Leitungskanal bilden, zum Führen einer elektrischen Leitung zum elektrischen Anschließen jeweils eines Schleifrings, wobei der wenigstens eine Leitungskanal durch die Isolierkörper elektrisch gegen die übrigen Schleifringe und/oder gegen die Schleifringwelle isoliert ist. Insbesondere verläuft ein solcher Leitungskanal in einem Führungskanal der Schleifringwelle. Insbesondere kann ein solcher Führungskanal durch oben beschriebene Leitungskanalabschnitte zusammengesetzt sein, indem jeder Isolierkörper wenigstens einen hohlen Leitungskanalabschnitt aufweist, der einen Teil des Profils des Isolierkörpers bildet und zum Teil in dem Führungskanal ausgebildet ist. Vorzugsweise wird ein solcher Leitungskanalabschnitt zusammengesetzt aus einem Abschnitt des Isolierkörpers, der an einen der Führungskanäle angepasst ist, insbesondere dazu ein Gegenprofil bildet, und einem Abschnitt, der ein Segment eines Außenmantels des Isolierkörpers bildet, auf dem der Schleifring getragen wird.

Vorzugsweise ist wenigstens eine Erhebung auf einem äußeren Zylinderabschnitt wenigstens eines Isolierkörpers vorgesehen, um dadurch einen festen Sitz eines auf diesen Zylinderabschnitt aufgeschobenen Schleifrings zu erreichen. Solche Erhöhungen können auf einfache Art und Weise vorgesehen werden und vermeiden, Isolierkörper und aufzusetzenden Schleifring mit entsprechend hoher Genauigkeit aneinander anzupassen.

Vorzugsweise sind mehrere, identische, gegeneinander austauschbare Schleifringe und/oder mehrere, identische, gegeneinander austauschbare Isolierkörper vorgesehen, insbesondere auf die Schleifringwelle aufgeschoben. Hierdurch kann ein modularer Aufbau erreicht werden. Die vorgeschlagene Schleifringwelle bietet hierfür eine sehr gute Basis. Auf die Schleifringwelle können unterschiedliche Isolierkörper in axialer Richtung aufgeschoben werden, die je nach herzustellendem Schleifringkörper und damit herzustellendem Schleifringübertrager auch in der axialen Reihenfolge unterschiedlich angeordnet sein können. Gleichwohl ergeben sich davon unabhängig axiale Leitungskanäle in den Isolierkörpern und es können unterschiedliche Schleifringe, nämlich welche, die hinsichtlich ihrer axialen Ausdehnung unterschiedlich sind, angeordnet werden. Es können in axialer Richtung unterschiedliche Schleifringe angeordnet werden, und es können auch im Vergleich zu einem anderen damit herstellbaren Schleifringkörper andere Schleifringe aus denselben Grundbausteinen angeordnet und kontaktiert werden. Die vorgeschlagene Lösung bzw. die vorgeschlagenen Lösungen schaffen somit einen modularen Aufbau. Auch dadurch kann ein Vorteil gegenüber Schleifringübertragern des Standes der Technik geschaffen werden.

Durch eine solche modulare Bauweise mit verschiedenen Einzelteilen ergeben sich auch Vorteile bei einer Montage bzw. beim Recycling. Aus dem Stand der Technik bekannte Lösungen, bei denen u.a. umspritzte Schleifringe verwendet werden, schaffen untrennbare Einheiten, die nicht oder nur mit großem Aufwand wieder aufgearbeitet werden können.

Gemäß einer Ausgestaltung wird ein Schleifringkörper vorgeschlagen, der dadurch gekennzeichnet ist, dass der Schleifring aus einem Gleitlagerhalbzeug aus Bronze_gefertigt ist, insbesondere stranggezogen oder stranggepresst ist. Es kann bspw. ein Halbzeug aus CuSn8 oder CuSn6 verwendet werden. So ist es möglich, dieses Halbzeug auf die benötigte Länge passend abzulängen und mechanisch zu bearbeiten. Durch die vorhandene Halbzeuggeometrie kann Bearbeitungszeit gespart werden und es kann ein durch das Strangziehverfahren hervorgerufen festes Bauteilerhalten erhalten werden. Es wird eine Ausführungsform vorgeschlagen, bei der zum Befestigen einer elektrischen Anschlussleitung der wenigstens eine Schleifring einen Gewindeschweißbolzen aufweist, bei der der wenigstens eine Schleifring ein an den Schleifring angelötetes oder angeschweißtes Anschlussstück aufweist und/oder bei der der Schleifring stranggezogen oder stranggepresst ist und ein beim Strangziehen oder Strangpressen angepresstes Anschlussstück aufweist.

Hierdurch kann auf einfache und zweckmäßige Weise eine sichere Kontaktierung des Schleifrings mit einer entsprechenden elektrischen Leitung, insbesondere einer entsprechenden elektrischen Anschlussleitung vorbereitet werden.

Insbesondere das Vorsehen eines Gewindeschweißbolzens ermöglicht es, eine entsprechende anzuschließende elektrische Leitung auf einfache Weise an diesen Gewindeschweißbolzen anzuschrauben, wenn die elektrische Leistung beispielsweise einen entsprechenden Kabelschuh mit Öse aufweist. Der Gewindeschweißbolzen als solcher kann auf einfache Weise mittels Schweißen fest an dem Schleifring von innen angeschweißt sein. Das Herstellen eines solchen Schleifringkörpers kann beispielsweise so erfolgen, dass die elektrische Leitung an den Schleifring von innen angeschraubt wird, bevor der Schleifring auf die Schleifringwelle und auf einen entsprechenden Isolierkörper aufgeschoben wird. Es kann dann der Schleifringkörper so weit vorbereitet werden, dass ein Isolierkörper auf die Welle aufgeschoben wird, der eine Öffnung in seinem Mantel zum Durchführen der entsprechenden elektrischen Leitung aufweist. Diese Öffnung ist vorzugsweise so ausgebildet, dass sie wenigstens in eine axiale Richtung offen ist, so dass der entsprechende bereits mit der elektrischen Leitung versehene Schleifring so auf diesen Isolierkörper aufgeschoben wird, dass dabei die befestigte elektrische Leitung etwa im Bereich ihres Anschlussbereichs axial in die Öffnung des Isolierkörpers eingeschoben wird. Es kann nun der nächste Isolierkörper auf die Welle aufgeschoben werden, sei es nun zum Isolieren desselben Schleifrings oder eines folgenden Schleifrings, wobei die elektrische Leitung beim Aufschieben dieses weiteren Isolierkörpers durch dessen Leitungskanalabschnitt durchgeführt wird. Dieser Leitungskanalabschnitt des neuen Isolierkörpers weist keine Öffnung in seinem Außenmantel auf, aber der korrespondierende Leitungsabschnitt des zuvor aufgeschobenen Isolierkörpers weist eine Öffnung auf, nämlich die, durch die nun die bereits zuvor an dem Schleifring angeschlossene elektrische Leitung reicht.

Somit schafft diese konkrete Lösung des modularen Aufbaus eine vergleichsweise einfache und dabei stabile Anschlussmöglichkeit für die betreffenden elektrischen Leitungen an die betreffenden Schleifringe.

Gemäß einer weiteren Ausgestaltung wird vorgeschlagen, dass für den Schleifringkörper in axialer Richtung mehrere Schleifringabschnitte vorhanden sind und jeder Schleifringabschnitt jeweils eine galvanisch verbundene Einheit bildet und Schleifringabschnitte unterschiedlicher axialer Größe unterschiedlich viele Schleifringe gleicher Größe aufweisen, so dass die jeweilige axiale Größe, also die Länge, des jeweiligen Schleifringabschnitts durch die Anzahl der jeweils verwendeten Schleifringe erreicht wird und/oder unterschiedlich viele Isolierkörper, insbesondere unterschiedlich viele Distanzisolierkörper gleicher Größe vorhanden sind. Auf der Schleifringwelle sind somit entsprechend viele und unterschiedliche Isolierkörper und entsprechend viele oder unterschiedliche Schleifringe aufgeschoben, um einen Schleifringkörper für die gewünschte Anwendung zu schaffen.

Außerdem wird ein Schleifringübertrager vorgeschlagen, der zum Übertragen elektrische Signale zwischen einem stehenden und einem um eine Drehachse drehenden Teil vorgesehen ist, wobei dieser Schleifringübertrager einen Schleifringkörper gemäß wenigstens einer vorbeschriebenen Ausführungsform aufweist.

Vorzugsweise ist ein Schleifringübertrager so ausgebildet, dass ein Signalteilabschnitt und ein Leistungsteilabschnitt vorhanden sind und der Signalteilabschnitt und der Leistungsteilabschnitt jeweils einen festen und einen dazu drehbar gelagerten Abschnitt aufweisen und die beiden drehbar gelagerten Abschnitte, also der drehbar gelagerte Abschnitt des Signalteils und der drehbar gelagerte Abschnitt des Leistungsteils vorzugsweise über ein Kuppelelement trennbar so miteinander verbunden sind, dass eine Drehbewegung des einen drehbar gelagerten Abschnitts über das Kuppelelement auf den anderen drehbar gelagerten Abschnitt übertragen wird. Die beiden drehbar gelagerten Abschnitte sind insbesondere als Signalteilwelle bzw. Leistungsteilwelle ausgebildet bzw. können so bezeichnet werden. Somit wird vorgeschlagen, dass die Signalteilwelle lösbar an der Leistungsteilwelle befestigt ist. Insbesondere wird hierfür eine Mitnehmerbuchse vorgeschlagen, die das Kuppelelement an dem Leistungsteil bildet und zum Aufnehmen eines korrespondierenden, am Signalteil, nämlich insbesondere an der Signalteilwelle, vorhandenen Mitnehmerstiftes ausgebildet ist. Somit können der Signalteilabschnitt und der Leistungsteilabschnitt auf einfache Weise miteinander funktional verbunden werden bzw. voneinander getrennt werden. Hierzu kann der feste Abschnitt des Signalteilabschnitts an dem festen Abschnitt des Leistungsteilabschnitts so befestigt werden, dass der Stift, oder ähnliches Element, der Signalteilwelle in die Buchse, oder ähnliches Element, der Leistungsteilwelle eingesetzt wird. Eine Befestigung der beiden festen Teile des Leistungsteilabschnitts und des Signalteilabschnitts bewirkt somit gleichzeitig eine funktionale Verbindung der Signalteilwelle mit der Leistungsteilwelle. Es wird nämlich eine funktionale Verbindung derart geschaffen, dass beide Wellen durch diese mechanische Kopplung zusammen drehen.

Hierdurch ist besonders vorteilhaft eine im Wesentlichen getrennte Vorbereitung des Leistungsteilabschnitts einerseits und des Signalteilabschnitts andererseits möglich. Dazu wird auch vorzugsweise vorgeschlagen, dass die Leistungsteilwelle eine mittige axiale Längsbohrung, nämlich ein so genanntes Zentralrohr aufweist, durch das die entsprechenden elektrischen Leitungen dem Signalteilabschnitt, nämlich der Signalteilwelle zugeführt werden können. Vorzugsweise kann im Übergangsbereich zwischen Leistungsteilwelle und Signalteilwelle eine elektrische Steckverbindung zum Anschließen der durch das Zentralrohr zugeführten elektrischen Leitungen vorgesehen sein. Demnach wird vorgeschlagen, einen oder mehrere Steckverbinder an der Leistungsteilwelle vorzusehen und korrespondierende Steckverbinder an der Signalteilwelle zum elektrischen Verbinden der daran angeschlossenen elektrischen Leitungen vorzusehen.

Vorzugsweise weist der Leistungsteilabschnitt, der auch vereinfacht als Leistungsteil bezeichnet werden kann, ein mittels Schnellverschlüssen verschlossenes Gehäuse auf. Der Schleifringübertrager, insbesondere das Gehäuse des Leistungsteils, ist dadurch schnell und einfach zugänglich. Damit können ggf. Fehler aufgefunden werden und durch die modulare Aufbauweise des Schleifringübertragers wäre entsprechend auch eine Reparatur mit verhältnismäßig geringem Aufwand durchführbar. Jedenfalls erleichtern die vorbeschriebenen Ausführungsformen einen Austausch einzelner Elemente, ohne dass der gesamte Schleifringübertrager in einem Fehlerfall demontiert und vollständig durch einen neuen getauscht werden müsste bzw. in einer Werkstatt repariert werden müsste.

Vorzugsweise wird wenigstens einer der drehbar gelagerten Abschnitte, also wenigstens eine der Leistungsteilwellen oder Signalteilwellen mittels wenigstens eines vorgespannten Lagers gelagert. Diese Lagerverspannung sorgt für eine Mindestbelastung und somit für korrekte Abrollverhältnisse des Wälzkörpers. Zusätzlich wird die Lagerung möglichst spielfrei, so dass möglichst wenig ungewollte Bewegungen wie Taumeln der Signalwelle auftreten.

Ebenfalls wird eine Schleifringwelle eines Schleifringkörpers vorgeschlagen. Eine solche Schleifringwelle weist wenigstens eines der Merkmale auf, die oben im Zusammenhang mit der Erläuterung von Ausführungsformen des Schleifringkörpers oder des Schleifringübertragers beschrieben wurden. Insbesondere weist die Schleifringwelle über ihren Umfang verteilte Führungskanäle zum Aufnehmen elektrischer Leitungen zum elektrischen Anschließen wenigstens eines Schleifrings auf. Durch eine solche Schleifringwelle werden somit auch die oben in diesem Zusammenhang beschriebenen Vorteile erreicht.

Ebenfalls wird ein Isolierkörper eines Schleifringkörpers vorgeschlagen, der zum Aufschieben auf die Schleifringwelle eines Schleifringkörpers gemäß wenigstens einer der oben beschriebenen Ausführungsformen ausgebildet ist. Der Isolierkörper weist entsprechend wenigstens ein Merkmal auf, das zum Isolierkörper im Zusammenhang mit wenigstens einer Ausführungsform des Schleifringkörpers, des Schleifringübertragers und/oder der Schleifringwelle beschrieben wurde.

Jedenfalls wird ein Schleifring eines Schleifringkörpers gemäß wenigstens einem der beschriebenen Ausführungsformen vorgeschlagen. Vorzugsweise ist der Schleifring zum Aufschieben auf einen Isolierkörper gemäß einem der beschriebenen Ausführungsformen eines Isolierkörpers vorbereitet. Vorzugsweise werden alle Schleifringe und Isolierkörper durch ein Abschlusselement, das auch als Abschlussdeckel bezeichnet werden kann, gegeneinander verspannt, so dass sich die Schleifringe nicht mehr relativ zu den Isolierkörpern drehen können. Ein solcher Abschlussdeckel ist vorzugsweise zugleich eine Lagerstelle eines Loslagers.

Der Schleifring weist vorzugsweise wenigstens ein Merkmal auf, das im Zusammenhang mit wenigstens einer Ausführungsform des Schleifringübertragers oder eines seiner Elemente beschrieben wurde.

Ebenfalls wird eine Windenergieanlage mit einer Gondel und einem relativ zur Gondel drehbar gelagerten aerodynamischen Motor vorgeschlagen, der wenigstens einen Schleifringübertrager gemäß einem der dazu erläuterten Ausführungsformen aufweist. Ein solcher in einer Windenergieanlage eingesetzter Schleifringübertrager ist insbesondere vorgesehen zum Übertragen von elektrischer Energie zu Verstellmotoren von Rotorblättern des Rotors und zum Übertragen elektrischer Signale zum Ansteuern eines solchen Motors zum Verstellen der Rotorblätter oder zum Übertragen von Daten zur Analgenkommunikation, insbesondere einer Anlagenbuskommunikation und/oder zum Übertragen von Messdaten von dem Rotor zur Gondel. Außerdem oder alternativ ist der Schleifringübertrager dazu vorbereitet, elektrische Energie zu einem Läufer eines elektrischen Generators zu übertragen. Insbesondere ist er dazu vorbereitet, einen Gleichstrom zum Erregen eines Läufers eines Synchrongenerators zu übertragen. Insbesondere wird er vorgesehen im Zusammenhang mit der Verwendung einer getriebelosen Windenergieanlage, bei der sich ein Läufer des Generators der Windenergieanlage mit dem aerodynamischen Rotor der Windenergieanlage mit dreht.

Nachfolgend wird die Erfindung nun anhand von Ausführungsformen unter Bezugnahme auf die begleitenden Figuren beispielhaft erläutert.
- Fig. 1: zeigt schematisch eine Windenergieanlage einer perspektivischen Darstellung.
- Fig. 2: zeigt einen Schleifringübertrager in einer seitlichen Schnittansicht.
- Fig. 3: zeigt einen Teil des Schleifringübertragers der Fig. 2 in einer seitlichen Schnitt-ansicht, bei dem nämlich ein Signalteil demontiert ist.
- Fig. 4: zeigt einen weiteren Teil des Schleifringübertragers der Fig. 2, nämlich einen demontierten Signalteil, der in Fig. 3 entsprechend nicht dargestellt ist.
- Fig. 5: zeigt in einer perspektivischen Ansicht einen Ausschnitt eines Schleifringkör-pers, der zu einem Teil in einem noch fertigzustellenden Schleifringübertrager montiert ist.
- Fig. 6: zeigt in einer perspektivischen Ansicht und zur Veranschaulichung einen Aus-schnitt einer unmontierten Schleifringwelle mit einigen Isolierkörpern und einem Schleifring.
- Fig. 7: veranschaulicht in einer perspektivischen Darstellung einen Isolierkörper mit einem Schleifring.
- Fig. 8: zeigt in einer perspektivischen Ansicht und in einem Ausschnitt einen Schleif-ring mit zwei Gewindeschweißbolzen und dabei einen zur Veranschaulichung montierten Kabelschub.
- Fig. 9: zeigt einen unmontierten Gewindeschweißbolzen.
- Fig. 10: zeigt perspektivisch in einem Ausschnitt eine Stirnseite eines Leistungsteils eines Schleifringübertragers.
- Fig. 11 und 12: zeigen in zwei unterschiedlichen Perspektiven eine Schleifringwelle.
- Fig. 13: zeigt eine Schleifringwelle in einer Draufsicht in axialer Richtung.
- Fig. 14 und 15: zeigen schematisch in unterschiedlichen perspektivischen Ansichten einen Grenzisolierkörper.
- Fig. 16: zeigt einen Grenzisolierkörper in einer Draufsicht in axialer Richtung.
- Fig. 17 und 18: zeigen in unterschiedlichen perspektivischen Ansichten einen Distanzisolierkörper.
- Fig. 19: zeigt einen Distanzisolierkörper in einer Draufsicht in axialer Richtung.
- Fig. 20: zeigt aus einem Ausschnitt des Distanzisolierkörpers der Fig. 19 eine Schnittansicht.
- Fig. 21: zeigt einen Schleifring in einer perspektivischen Darstellung.
- Fig. 22: zeigt einen Schleifring zum Übertragen eines Erdpotentials in einer perspektivischen Ansicht.
- Fig. 23: zeigt einen Signalteil eines Schleifringübertragers ohne Abdeckhaube in einer perspektivischen Darstellung.

Nachfolgend können ähnliche aber nicht identische Elemente mit identischen Bezugszeichen versehen sein, um funktionale Ähnlichkeit zu unterstreichen. Gleiche Ausführungsformen oder Elemente gleicher Ausführungsformen können in unterschiedlichen Maßstäben dargestellt sein.

Fig. 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

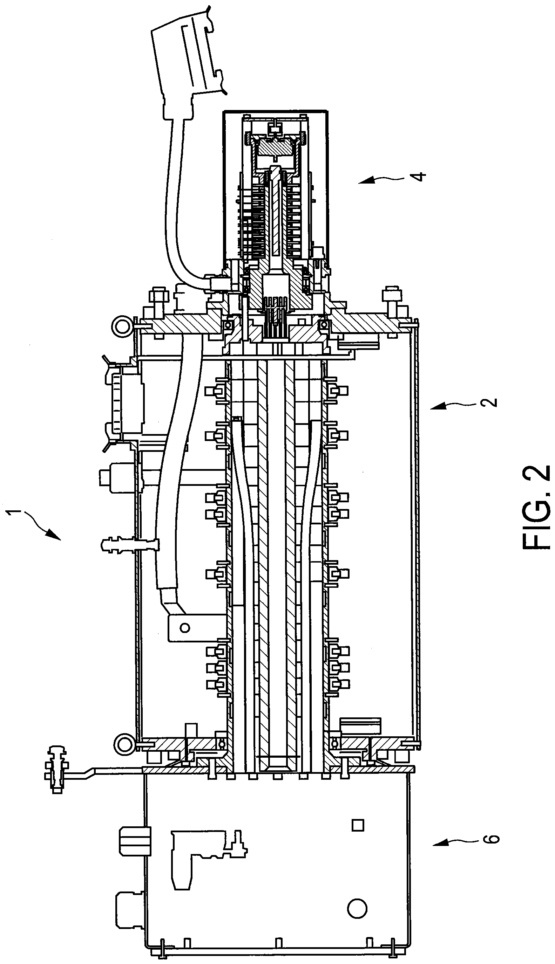

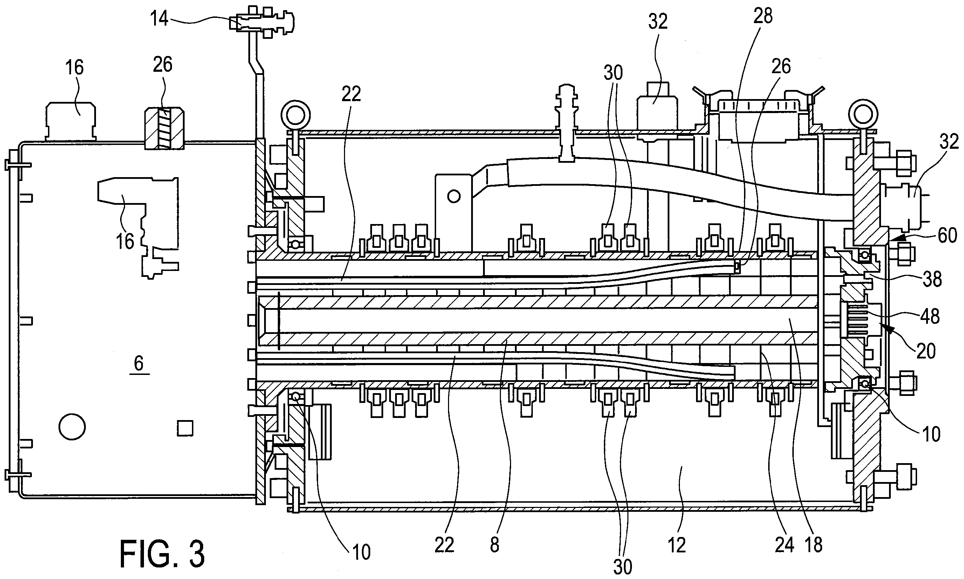

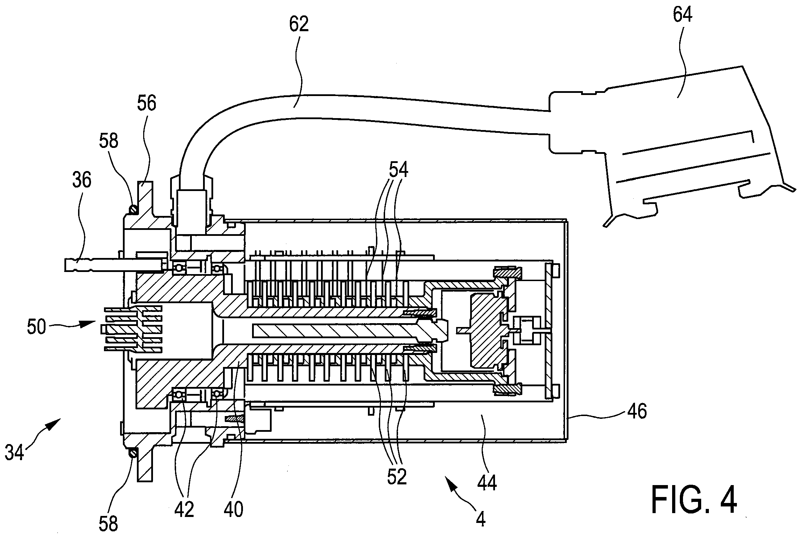

Fig. 2 zeigt in einer seitlichen Schnittansicht einen Schleifringübertrager 1 mit einem Leistungsteil 2, einem Signalteil 4 und einem drehenden Anschlussteil 6. Details zum Leistungsteil 2 mit drehendem Anschlussteil 6 sind in Fig. 3 gezeigt und Details zum Signalteil 4 sind in Fig. 4 gezeigt.

Fig. 3 zeigt den drehenden Anschlussteil 6 fest verbunden mit einer Schleifringwelle 8. Die Schleifringwelle 8 wird mittels zweier Leistungsteillager 10 relativ zum stehenden Leistungsteil 12 drehbar gelagert. Dadurch wird auch der drehende Anschlussteil 6 relativ zum stehenden Leistungsteil 12 drehbar gelagert.

Der drehende Anschlussteil 6 kann über eine Mitnehmerbefestigung 14 an einem drehenden Anlagenteil, wie beispielsweise einem Teil eines aerodynamischen Rotors einer Windenergieanlage, so befestigt werden, dass der drehende Anschlussteil 6 mit diesem exemplarisch genannten Rotor mit dreht, wobei gleichzeitig die Schleifringwelle 8 mit dreht. Sämtliche Anschlüsse in diesem drehenden Element, das hier exemplarisch als aerodynamischer Rotor einer Windenergieanlage genannt wurde, können an diversen Anschlusselementen 16, die ganz unterschiedlich ausgestaltet sein können, an dem drehenden Anschlussteil 6 angeschlossen werden. Dies betrifft sowohl Leistungsanschlüsse als auch Signalanschlüsse. Zur Verdeutlichung sei erwähnt, dass der Schleifringübertrager 1 grundsätzlich zum Übertragen elektrischer Signale verwendet werden kann, was sowohl elektrische Signale hoher Leistung, insbesondere Versorgungsstrom für entsprechende elektrische Geräte, beinhaltet als auch elektrische Signale, die im Wesentlichen Informationen wie Steuersignale oder Messsignale übertragen. Soweit bei dem Schleifringübertrager 1 aber zwischen Leistungsteil 2 und Signalteil 4 und zugehöriger Komponenten unterschieden wird, ist unter dem Signalteil 4 derjenige Teil des Schleifringübertragers 1 zu verstehen, der im Wesentlichen Signale geringer Leistungsdichte überträgt, also insbesondere Steuersignale und Messsignale. In Abgrenzung dazu, ist unter dem Leistungsteil derjenige Teil des Schleifringübertragers zu verstehen, der Signale hoher Leistungsdichte bzw. hoher Leistung überträgt, nämlich Leistung, die wesentlich höher ist als die des Signalteils. Vorzugsweise wird auch eine über den Schleifringübertrager vorzunehmende Erdverbindung - im elektrotechnischen Sinne - über den Leistungsteil vorgenommen.

Auf Details des Anschlusses der elektrischen Leitungen an dem drehenden Anschlussteil kommt es nicht an. Jedenfalls gehen von dem drehenden Anschlussteil 6 elektrische Leitungen zur Schleifringwelle 8. Elektrische Leitungen, die Signale geringer Leistung übertragen sollen und zum Signalteil 4 führen sollen, sind in einer als Zentralrohr 18 bezeichneten axialen Durchgangsbohrung zum Signalteilanschlussbereich 20 geführt.

Elektrische Leitungen zum Übertragen hoher Leistung, die der Einfachheit halber auch als Energieleitungen 22 oder Leistungsleitungen 22 bezeichnet werden können, werden in der Schleifringwelle 8 außerhalb des Zentralrohrs 18 in Führungskanälen 24 geführt. Die Energieleitungen 22 werden dabei über einen Gewindeschweißbolzen 26 an einem Schleifring 28 befestigt. Der Gewindeschweißbolzen 26 ist hierfür an den Schleifring 28 angeschweißt und die Energieleitung 22 mittels eines Kabelschuhs, der in Fig. 3 nicht zu erkennen ist, später aber noch dargestellt wird, an dem Gewindeschweißbolzen 26 fest angeschraubt und damit mit dem betreffenden Schleifring 28 galvanisch verbunden.

Der stehende Leistungsteil 12 weist Bürsten 30 auf, die auf Schleifringen 28, die unterschiedliche axiale Längen aufweisen können, schleifen, um so elektrischen Strom von der Schleifringwelle 8 auf den stehenden Leistungsteil 12 zu übertragen. Von dem stehenden Leistungsteil 12 kann dann die zwischen Schleifringen 28 und Bürsten 30 übertragene elektrische Energie weiter über entsprechende stehende Anschlusselemente 32 abgeführt und weitergeleitet werden. Auf die konkrete Ausgestaltung der stehenden Anschlusselemente 32 kommt es nicht an. Im Übrigen ist die Übertragungsrichtung der elektrischen Leistung, nämlich mittels elektrischen Stroms, von dem drehenden Teil zum stehenden Teil nur exemplarisch genannt. Ebenso kommt eine Übertragung in die entgegengesetzte Richtung in Betracht, wie es beispielsweise bei dem Übertragen elektrischer Energie von einer Gondel einer Windenergieanlage auf den aerodynamischen Rotor der Windenergieanlage mittels eines solchen Schleifringübertragers 1 üblich ist.

Der Signalteil 4, der in Fig. 4 dargestellt ist, weist einen zum Signalanschlussbereich 20 des Leistungsteils 2 korrespondierenden Signalanschlussbereich 34 auf. Zum Herstellen eines vollständig zusammengebauten Schleifringübertragers 1, wie er in Fig. 2 dargestellt ist, wird der Signalteil 4 an dem Leistungsteil 2 stirnseitig am Signalanschlussbereich 20 mit seinem korrespondierenden Signalanschlussbereich 34 angeordnet und festgeschraubt. Dabei greift ein Mitnehmerstift 36 des Signalteils 4 in eine Mitnehmerbuchse 38 des Leistungsteils 2 ein. Die Mitnehmerbuchse 38 ist fest mit der Schleifringwelle 8 des Leistungsteils 2 verbunden und eine etwaige Drehung der Schleifringwelle 8 wird somit über die Mitnehmerbuchse 38 und den Mitnehmerstift 36 auf einen drehenden Teil 40 des Signalteils 4 übertragen. Der drehende Teil 40 ist hierzu mittels einer einseitigen Lagerung 42 in einem stehenden Teil 44 des Signalteils 4 gelagert. Die einseitige Lagerung 42 ist insoweit einseitig, als dass sie in axialer Richtung nur an einer Seite, nämlich zum Leistungsteil 2 hin, angeordnet ist. Dadurch ergibt sich eine vorteilhafte Zugänglichkeit des Signalteils 4 durch eine vergleichsweise einfach abzunehmende Abdeckhaube 46.

Der Signalteil 4 ist zum Übertragen elektrischer Signale mit wenig Leistung, insbesondere Steuersignalen und Messsignalen, vorgesehen. Diese elektrischen Signale werden durch Leitungen in dem Zentralrohr 18 des Leistungsteils 2 zugeführt bzw. abgeführt und über den Signalstecker 48 und Signalgegenstecker 50 auf den drehenden Teil 40 des Signalteils 4 übertragen. Entsprechend werden auch Signalstecker 48 und Signalgegenstecker 50 beim Aneinandersetzen des Signalteils an den Leistungsteil 2 zu einer Steckverbindung zusammengesteckt. Entsprechend sind die Signalleitungen, die im Leistungsteil 2 in dem Zentralrohr 18 geführt werden, mit dem Signalstecker 48 galvanisch verbunden. Entsprechend sind Signalleitungen in dem drehenden Teil 40 des Signalteils 4 mit dem Signalgegenstecker 50 elektrisch verbunden bzw. dort angeschlossen. Die Fig. 2 bis 4 zeigen im Wesentlichen den Aufbau des Schleifringübertragers 1 bzw. seiner Komponenten, wobei konkrete Signalleitungen nicht eingezeichnet sind.

Zur weiteren Übertragung elektrischer Signale mit weniger Leistung in dem Signalteil 4 werden Leitungen von dem Signalstecker 48 mit Schleifringen 52 elektrisch verbunden. Auf den Schleifringen 52 des Signalteils 4 schleifen dann Bürsten 54, von denen unterschiedliche in der Fig. 4 dargestellt sind.

Zum festen Verbinden des Signalteils 4 mit dem Leistungsteil 2, nämlich im Bereich des Signalanschlussbereichs 20 und des korrespondierenden Signalanschlussbereichs 34, weist der Signalteil 4 einen entsprechenden Anschlussflansch 56 auf. Zudem ist ein Dichtungsring 58 im Bereich des Anschlussflansches 56 vorgesehen, um am Leistungsteil 2 in einem Dichtungsbereich 60 abzudichten. Es wird darauf hingewiesen, dass der Maßstab des Leistungsteils 2 der Fig. 3 und des Signalteils 4 der Fig. 4 unterschiedlich groß sind.

Zum Weiterleiten bzw. Zuführen der in dem Signalteil 4 übertragenen leistungsschwachen Signale ist schließlich am stehenden Teil 44 des Signalteils 4 ein Datenkabel 62 mit Datenanschlussstecker 64 vorgesehen.

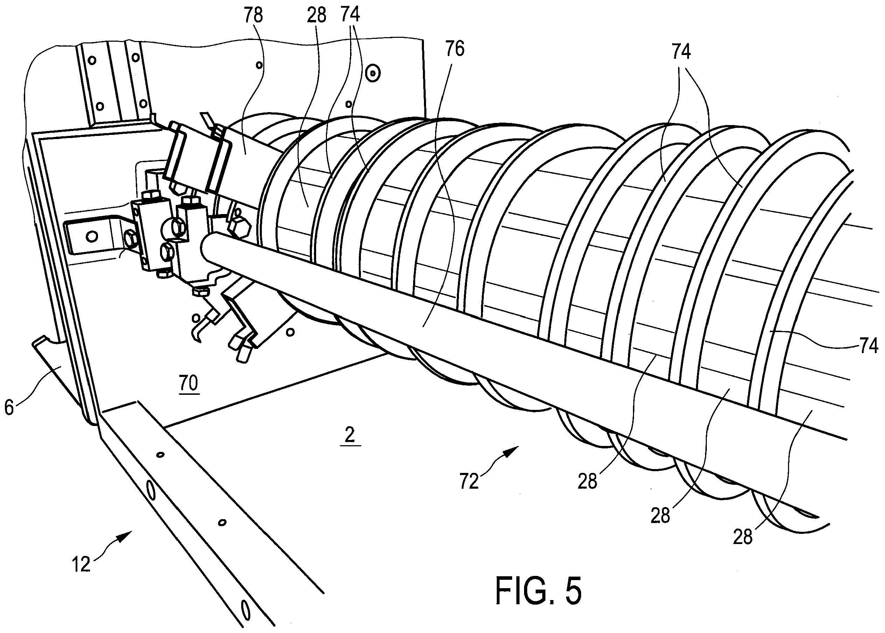

Der Ausschnitt eines teilweise fertiggestellten Leistungsteils 2 der Fig. 5, und damit eines teilweise fertiggestellten Schleifringübertragers zeigt ein geöffnetes Gehäuse 70 des Leistungsteils 2. Das teilweise geöffnete Gehäuse 70 ist damit Teil des stehenden Leistungsteils 12. Außerdem ist ein Schleifringkörper 72 zum Teil dargestellt, der einige Schleifringe 28 umfasst, die in axialer Richtung durch Isolationsscheibenabschnitte gegeneinander elektrisch isoliert sind. Die Isolationsscheibenabschnitte 74 sind jeweils Teil eines Grenzisolierkörpers, der später noch im Detail beschrieben wird.

Zum Abnehmen oder Übertragen elektrischer Energie zwischen den Schleifringen und dem stehenden Leistungsteil 12 des Leistungsteils 2 ist eine hier stangenförmig ausgebildete Halterung 76 für Bürstenaufnahmen 78 vorgesehen. Diese Bürstenaufnahmen 78 sind über ein Befestigungsmittel 80 an der stangenförmigen Halterung 76 befestigt. In die Bürstenaufnahmen 78 kann jeweils eine Kohlebürste eingesetzt werden, um auf dem jeweiligen Schleifring 28 zu schleifen und dadurch eine elektrische Verbindung zwischen stehendem Leistungsteil 12 und drehendem Schleifringkörper 72 herzustellen. In der Fig. 5 sind nur einige Bürstenaufnahmen 78 vorhanden und diese weisen auch noch keine Kohlebürsten auf und auch noch keine elektrische Verbindung, die ohnehin mit der jeweiligen Bürste vorzunehmen wäre. Insoweit ist das Leistungsteil 2 und damit der Schleifringübertrager 1 insgesamt noch nicht vollständig fertig. Der grundsätzliche insbesondere mechanische Aufbau ist aber hier bereits zu erkennen.

Im Übrigen ist in Fig. 5 auch noch ein kleiner Abschnitt des stehenden Anschlussteils 6 zu erkennen, das drehsteif mit der Schleifringwelle und damit dem Schleifringkörper 72 insgesamt verbunden ist.

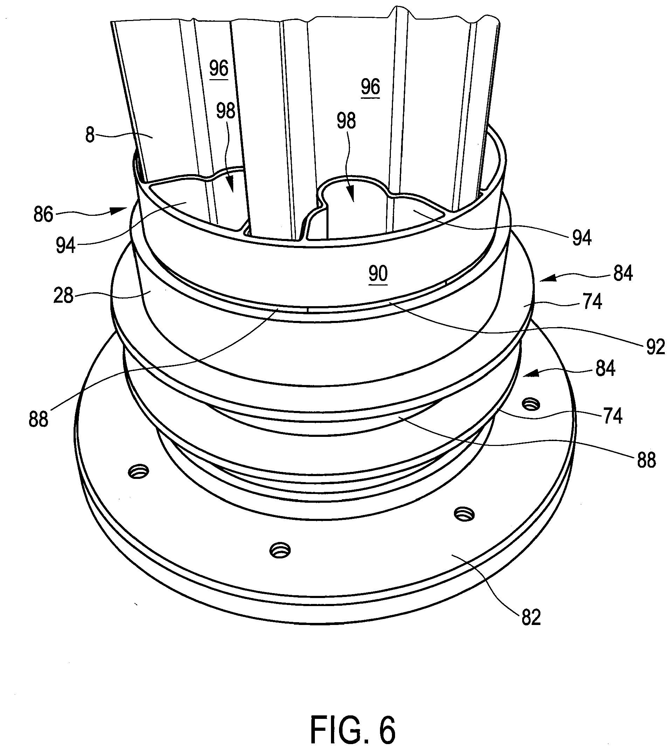

Der Fig. 5 ist zudem zu entnehmen, dass die Schleifringe 28 des Schleifringkörpers 72 in axialer Richtung unterschiedlich lang sind und somit unterschiedliche Abstände zwischen den Isolationsscheibenabschnitten 74 vorhanden sind. Den Aufbau eines solchen Schleifringkörpers 72 veranschaulicht die Fig. 6.

Fig. 6 zeigt in einer perspektivischen Darstellung den Ausschnitt einer Schleifringwelle 8, die hier demontiert ist und auf ihrem Wellenflansch 82 ruht. Auf die Schleifringwelle 8 sind zwei Grenzisolierkörper 84 und ein Distanzisolierkörper 86 aufgeschoben. Jeder Grenzisolierkörper 84 weist einen Isolationsscheibenabschnitt 74 und einen Isoliermantelabschnitt 88 auf. Der Distanzisolierkörper 86 weist keinen Isolationsscheibenabschnitt, sondern nur einen Mantel 90 auf.

Zur Veranschaulichung der benötigten Elemente eines Schleifringkörpers 72 ist zudem ein Schleifring 28 aufgeschoben und sitzt auf dem Isoliermantelabschnitt 88 eines Grenzisolierkörpers 84. Der Schleifring 28 verdeckt dabei eine Mantelöffnung 92 in dem Isoliermantelabschnitt 88 des Grenzisolierkörpers 84.

Die veranschaulichende Fig. 6 zeigt zudem für den Distanzisolierkörper 86 mehrere Leitungskanalabschnitte 94, die jeweils in einem Führungskanal 96 der Schleifringwelle 8 geführt sind. Die beiden aufgesteckten Grenzisolierkörper 84 weisen ebenfalls solche Leitungskanalabschnitte auf, so dass sich jeweils ein Leitungskanal 98 in den aneinander gesteckten Grenzisolierkörpern 84 und Distanzisolierkörpern 86 ergibt. Von einem solchen Leitungskanal 98 aus kann eine entsprechende elektrische Leitung durch die Mantelöffnung 92 mit dem gezeigten Schleifring 28 elektrisch verbunden werden.

Es wird wiederholt, dass die Fig. 6 nur zur Veranschaulichung vorgesehen ist. Tatsächlich würden zumindest gemäß einer bevorzugten Ausführungsform jeweils Schleifringe mit einer axialen Ausdehnung verwendet werden, die jeweils vollständig zwischen zwei Isolationsscheibenabschnitten angeordnet wären. Entsprechend würde bei Verwendung eines kurzen Schleifrings 28, also eines Schleifrings, der in axialer Richtung kurz ist, kein Distanzisolierkörper 86 aufgeschoben werden, sondern wieder ein Grenzisolierkörper 84, um den Schleifring 28 auch in axialer Richtung zu isolieren.

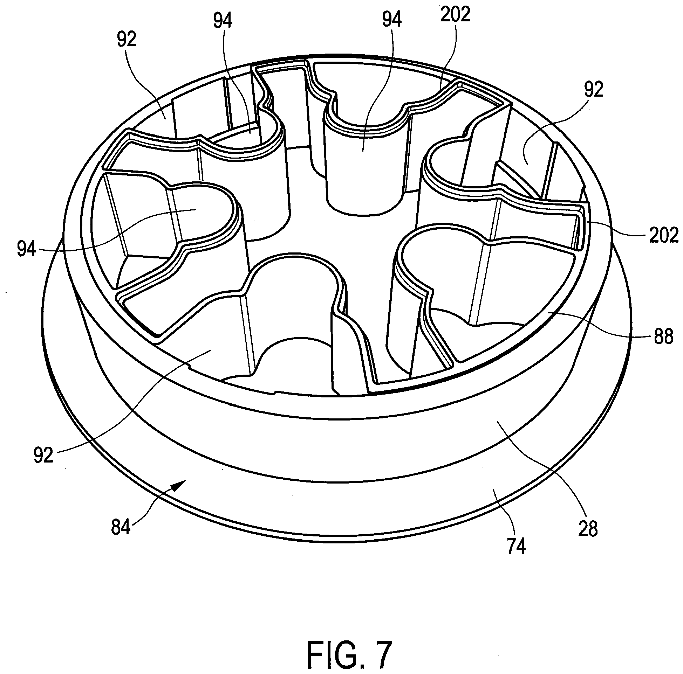

Zur Verdeutlichung des Zusammenspiels zwischen Schleifring und Isolierkörper wird die Fig. 7 verwendet. Dort ist ein Grenzisolierkörper 84 mit einem aufgeschobenen Schleifring 28 dargestellt. Der Grenzisolierkörper 84 weist einen Isolationsscheibenabschnitt 74 auf zum elektrischen Isolieren des Schleifrings 28 in eine axiale Richtung bzw. zu einer axialen Seite. Zur Isolierung und auch zum Positionieren in radialer Richtung weist der Grenzisolierkörper 84 einen Isoliermantelabschnitt 88 auf. Der Isoliermantelabschnitt 88 bildet im Wesentlichen einen durchgehenden Zylindermantel, der allerdings im gezeigten Beispiel drei Mantelöffnungen 92 aufweist. Diese Mantelöffnungen 92 sind in axialer Richtung zu einer Seite offen, nämlich gemäß Fig. 7 nach oben, und zur anderen axialen Seite geschlossen. Damit weist der Isoliermantelabschnitt 88 somit jedenfalls einen durchgängigen Zylindermantelabschnitt auf, der im Übrigen mit dem Isolationsscheibenabschnitt 74 unmittelbar verbunden ist. Dabei ist der Grenzisolierkörper 84 aus einem Stück hergestellt und kann beispielsweise aus einem Epoxidharz, aus einem Thermoplast und/oder als Spritzgussteil vorgesehen sein.

Der Grenzisolierkörper 84 weist zudem sechs Leitungskanalabschnitte 94 auf. Die Leitungskanalabschnitte 94 sind zum Einsetzen bzw. axialen Entlangschieben in entsprechenden Führungskanälen 96 einer Schleifringwelle 8 vorgesehen, wie sie beispielsweise zum Teil in der Fig. 6 gezeigt ist. Die Leitungskanalabschnitte 94 weisen zudem an einer axialen Seite, nämlich gemäß Fig. 7 nach oben, eine umlaufende Stufe 202 auf, die jeweils zwischen zwei benachbarten Leitungskanalabschnitten 94 am Isoliermantelabschnitt 88 weiter geführt wird. Dadurch ergibt sich insgesamt eine umlaufende Stufe 202. An der anderen axialen Seite des Grenzisolierkörpers 84 ist eine entsprechende reziproke, umlaufende Stufe vorgesehen. Dabei ist vorgesehen, dass mehrere auf der Schleifringwelle axial benachbart angeordnete Isolierkörper, seien es nun Grenzisolierkörper 84 oder Distanzisolierkörper 86, jeweils zu einer Seite die umlaufende Stufe 202 und zur anderen Seite zur umlaufenden Stufe 202 eine reziproke, ebenfalls umlaufende Stufe aufweisen. Dadurch können benachbarte Isolierkörper nicht nur axial aneinander, sondern im Bereich der umlaufenden Stufe 202 auch ineinander gesetzt werden.

Die Leitungskanalabschnitte 94 mehrerer Isolierkörper verbinden sich dann zu je einem Isolierkanal, in dem wenigstens eine elektrische Leitung geführt werden kann. Eine solche elektrische Leitung kann dann, je nachdem in welchem Isolierkanal sie geführt wird, bei der entsprechenden Mantelöffnung 92 mit dem Schleifring 28 elektrisch verbunden werden.

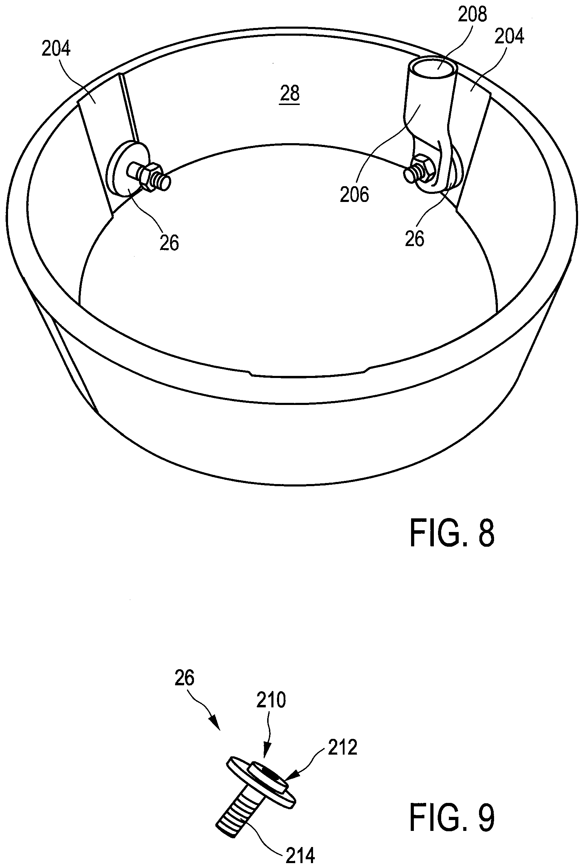

Fig. 8 zeigt lediglich einen Schleifring 28 - nicht ganz vollständigen - in einer perspektivischen Ansicht. An dem Schleifring 28 sind von innen zwei Gewindeschweißbolzen 26 angeordnet, nämlich angeschweißt. Der Gewindeschweißbolzen 26 ist dabei jeweils in einer flachen axialen Nut 204 angeordnet. Diese axialen Nuten 204 können bereits beim Herstellen des Schleifrings 28, insbesondere in einem Strangpressverfahren, vorgesehen sein. Durch diese flachen axialen Nuten 204 wird ein flacher Bereich geschaffen, an den die Gewindeschweißbolzen 26 gut und sicher angeschweißt werden können. Das Anschweißen kann beispielsweise durch ein Lichtbogenschweißen oder durch Löten vorgenommen werden.

Zum elektrischen Verbinden mit einer elektrischen Leitung ist ein Kabelschuh 206 vorgesehen, der ein entsprechendes Kabel aufnimmt und mit einer Öse an dem Gewindeschweißbolzen 26 fest und galvanisch gut leitend befestigt werden kann. Um dies zu veranschaulichen, ist der Kabelschuh 206 in der Fig. 8 gezeigt, der jedoch in der Darstellung keine Leitung aufweist. Eine solche kann in die Öffnung 208 des Kabelschuhs 206 eingeführt und beispielsweise durch Verpressen befestigt werden.

Ein Gewindeschweißbolzen 26 ist in Fig. 9 gezeigt. Dort ist gezeigt, dass der Gewindeschweißbolzen 26 im Wesentlichen einen Schweißabschnitt 210 mit ebener Anlagefläche 212 aufweist. Zum Befestigen einer Leitung insbesondere mittels Kabelschuh ist der Gewindeabschnitt 214 vorgesehen.

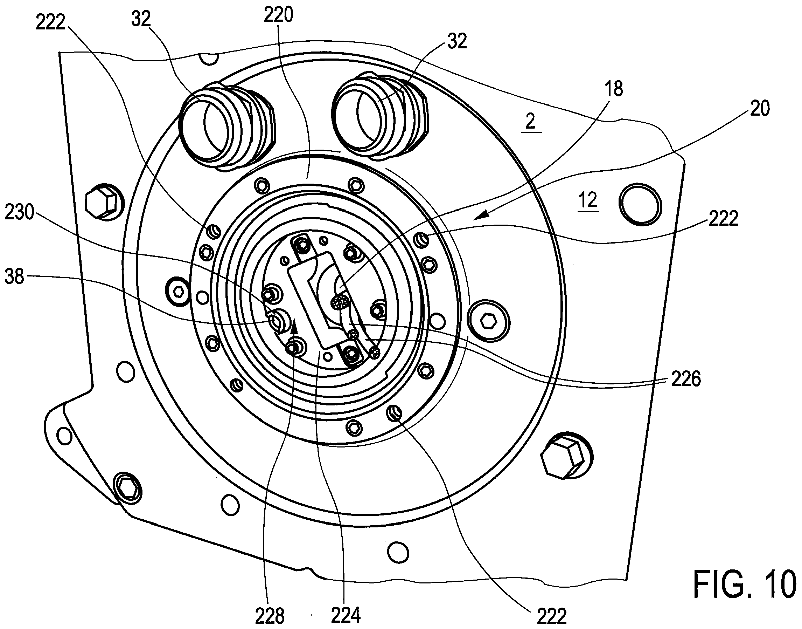

Fig. 10 zeigt eine perspektivische Ansicht auf einen Stirnbereich eines Leistungsteils 2. Somit ist im Wesentlichen der Signalteilanschlussbereich 20 des Leistungsteils 2 zu sehen. Ein umlaufender Befestigungsring 220 ist dazu vorgesehen, dass der in Fig. 4 gezeigte Leistungsteil mit seinem Anschlussflansch 56 dort angesetzt und festgeschraubt werden kann. Dazu weist der Befestigungsring 220 einige Gewindebohrungen 222 auf. Der Befestigungsring 220 ist damit Teil des stehenden Leistungsteils 12.

Innerhalb des Befestigungsrings 220 ist dabei ein Wellenabschnitt 224 vorhanden, der fest mit der Schleifringwelle 8 verbunden ist und damit relativ zum Befestigungsring 220 drehbar gelagert ist. In Abweichung zur Fig. 3 sind in Fig. 10 einige Enden von Signalleitungen 226 zu sehen, die aus dem teilweise in Fig. 10 erkennbaren Zentralrohr 18 herausragen. Im Gegensatz zur Fig. 3 ist jedoch in Fig. 10 der Signalstecker 48 noch nicht vorhanden, der noch vorzusehen wäre und mit dem Signalleitungen 226 noch funktional zu verbinden wäre.

Wird ein Signalteil 4, wie in Fig. 4 gezeigt, an den Leistungsteil 2, wie in Fig. 10 gezeigt, angesetzt und mit seinem Anschlussflansch 56 fest an dem Befestigungsring 220 befestigt, erfolgt dies so, dass der Mitnehmerstift 36 in die in Fig. 10 im Ansatz dargestellte Mitnehmerbuchse 38 eingeführt wird. Die Mitnehmerbuchse 38 ist dabei so ausgeführt, dass der Wellenabschnitt 224 eine Mitnehmerbohrung 228 aufweist, in die eine, wie in Fig. 10 gezeigte, Mitnehmerhülse 230 eingesetzt wird, um darin den Mitnehmerstift 36 aufzunehmen. Durch die Verwendung der Mitnehmerhülse 230 ist eine gewisse Elastizität erreichbar und die Mitnehmerhülse 230 kann zudem so ausgebildet sein, dass sie das Einführen des Mitnehmerstiftes 36 beim Zusammensetzen von Signalteil 4 und Leistungsteil 2 auch etwas führt.

Wie auch der Gesamtansicht der Fig. 2 zu entnehmen ist, ist der Signalteil 4 in seinen Außenabmessungen deutlich kleiner als der Leistungsteil 2. Im Grunde ragt der Signalteil 4 in radialer Richtung kaum über die Außenabmessung des Befestigungsrings 220 hinaus. Die in der Fig. 10 gezeigten, stehenden Anschlusselemente 32, die zum Anschließen von große Leistungen übertragenden elektrischen Leitungen des Leistungsteils vorgesehen sind, liegen somit außerhalb des Signalteils 4.

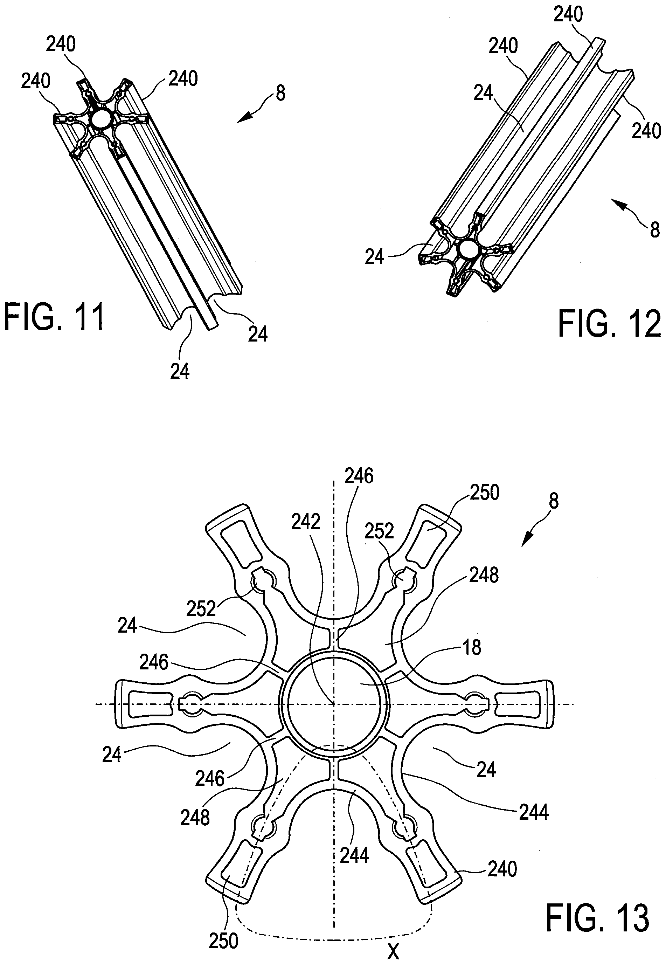

Fig. 11 und 12 zeigen zwei unterschiedliche perspektivische Ansichten einer Schleifringwelle 8. Diese Schleifringwelle 8 ist im Grunde sternförmig ausgebildet mit sechs gleichen und symmetrisch jeweils um 60° zueinander versetzten Armen 240. Jeweils zwischen zwei benachbarten Armen 240 sind Führungskanäle 24 ausgebildet, zum Aufnehmen jeweils eines Leitungskanalabschnitts 94 eines Grenzisolierkörpers 84 oder Distanzisolierkörpers 86, wie beispielsweise in Fig. 6 gezeigt ist. Darin können dann in axialer Richtung über den Umfang der Schleifringwelle 8 verteilt elektrische Leitungen, insbesondere zum Leiten elektrischen Stroms hoher Leistung bzw. hoher Stromstärke, geführt werden. Eine solche Schleifringwelle 8 kann durch ein Strangpressverfahren hergestellt sein. Entsprechend weist die Schleifringwelle 8 einen in axialer Richtung gleichbleibenden, nämlich sternförmigen Querschnitt auf.

Einzelne Abschnitte der Schleifringwelle 8 können in der axialen Draufsicht der Fig. 13 erklärt werden. Demnach weist die Schleifringwelle 8 ein Zentralrohr 18 auf, durch das eine Mittelachse 242 der Schleifringwelle 8 läuft. Die sechs Arme 240 sind gleichmäßig und konzentrisch um die Mittelachse 242 und damit konzentrisch um das Zentralrohr 18 angeordnet. Die Arme 240 sind untereinander über Verbindungsabschnitte 244 verbunden, die hier in der axialen Draufsicht etwa als Kreissegment ausgestaltet sind. Diese etwa kreissegmentförmig ausgebildeten Verbindungsabschnitte 244 bilden jeweils einen Führungskanal 24 bzw. einen Teil davon. Außerdem sind die Verbindungsabschnitte 244 über Verbindungsstege 246 mit dem Zentralrohr 18 verbunden und darüber besteht auch eine Verbindung zwischen dem Zentralrohr 18 und den Armen 240. Hierdurch ergibt sich insgesamt eine stabile aber gleichwohl gewichtsmäßig leichte Struktur. Ein geringes Gewicht wird u.a. auch durch die Basishohlräume 248 und die Armhohlräume 250 erreicht. Die Basishohlräume 248 sind hierbei zwischen einem Basisbereich jeweils eines Armes 240, zwei Verbindungsstegen 246 und einem Teil des Zentralrohrs 18 ausgebildet. Die Armhohlräume 250 sind jeweils in einem radial außen im Arm 240 angeordneten Bereich vorhanden.

Jeder Arm 240 weist zudem axiale Gewindebohrungen 252 auf, mittels derer die Schleifringwelle 8 an ihren beiden Stirnseiten an weiteren Elementen befestigt werden kann. Insbesondere ist hierdurch eine feste und drehsteife Verbindung mit dem bzw. an dem drehenden Anschlussteil 6 erreichbar. Und es ist eine feste und drehsteife Verbindung an dem Wellenabschnitt 224 erreichbar, der in Fig. 10 dargestellt ist.

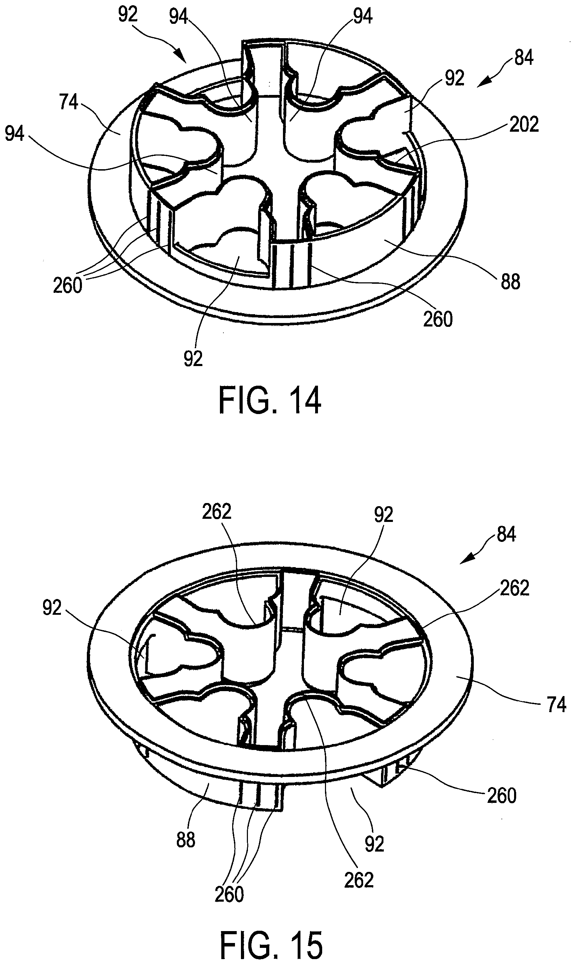

Der Grenzisolierkörper 84 ist in den Fig. 14 und 15 in zwei unterschiedlichen Perspektiven dargestellt. Er weist einen etwa zylindermantelförmigen Isoliermantelabschnitt 88 auf, der durch drei Mantelöffnungen 92 teilweise unterbrochen ist. Zum Isolieren axial benachbarter Schleifringe ist der Isolationsscheibenabschnitt 74 vorgesehen, der etwa scheibenförmig vollständig umläuft und einen größeren Außendurchmesser als der Isoliermantelabschnitt 88 aufweist. Bestimmungsgemäß wird ein Schleifring axial auf den Isoliermantelabschnitt 88 aufgeschoben und stößt dann gegen den Isolationsscheibenabschnitt 74. Um einen festen Sitz auf dem Isoliermantelabschnitt 88 für einen aufgeschobenen Schleifring zu erreichen, sind Mantelerhöhungen 260 auf dem Isoliermantelabschnitt 88 vorgesehen. Diese Mantelerhöhungen sind als sehr flache, längliche und in axialer Richtung ausgerichtete Erhöhungen ausgebildet und über den Umfang des Isoliermantelabschnitts 88 verteilt. Diese Mantelerhöhungen 260 sind mit dem übrigen Grenzisolierkörper 84 einstückig aus einem Material gefertigt und können beispielsweise in einer Spritzgussform zum Herstellen des Grenzisolierkörpers 84 bereits berücksichtigt sein. Die Mantelerhöhungen sind insbesondere weniger als 1 mm hoch.

Zum Führen elektrischer Leitungen und zum möglichst passgenauen Ansetzen und Aufschieben auf eine Schleifringwelle sind die Leitungskanalabschnitte 94 vorgesehen.

Fig. 14 zeigt eine umlaufende Stufe 202, die auf den Leitungskanalabschnitten 94 und zu einem Teil auf dem isoliermantelabschnitt 88 vorgesehen ist. Diese umlaufende Stufe 202 ist eine umlaufende Erhöhung, die dabei bezogen auf einen Mittelpunkt des Grenzisolierkörpers 84 nach außen hin angeordnet ist.

Eine andere Seite des Grenzisolierkörpers 84, die in Fig. 15 gezeigt ist, weist eine korrespondierende umlaufende Stufe 262 auf. Diese korrespondierende umlaufende Stufe 262 ist ebenfalls im Wesentlichen auf einem Rand der Leitungskanalabschnitte 94 ausgebildet und zum Teil am Isoliermantelabschnitt 88, nämlich im Übergangsbereich zwischen dem Isoliermantelabschnitt 88 zum Isolationsscheibenabschnitt 74. Dabei ist die korrespondierende Stufe 262 eine Erhöhung, die zum Mittelpunkt des Grenzisolierkörpers 84 weist. Dadurch ist die umlaufende Stufe 202 an die korrespondierende umlaufende Stufe 262 angepasst und können aneinandergesetzt werden.

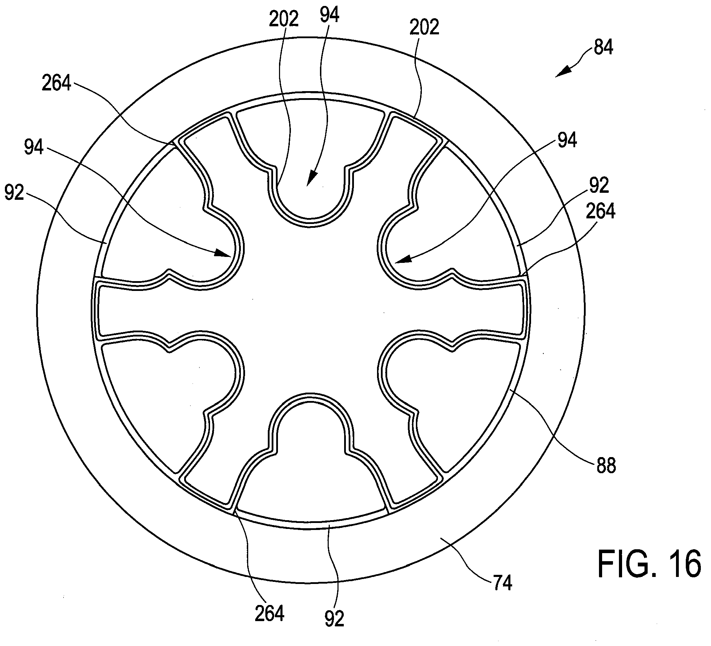

Fig. 16 zeigt im Grunde eine Draufsicht auf den Grenzisolierkörper 84 gemäß der Fig. 14, also eine Draufsicht auf die umlaufende Stufe 202. Ansonsten sind aus dieser Fig. 16 der Isolationsscheibenabschnitt 74 und der Isoliermantelabschnitt 88 zu entnehmen. Die umlaufende Stufe 202 verläuft auf einem Rand der Leitungskanalabschnitte 94 und zu einem Teil auf einem Rand des Isoliermantelabschnitts 88. Öffnungskanten 264 deuten die drei Mantelöffnungen 92 an.

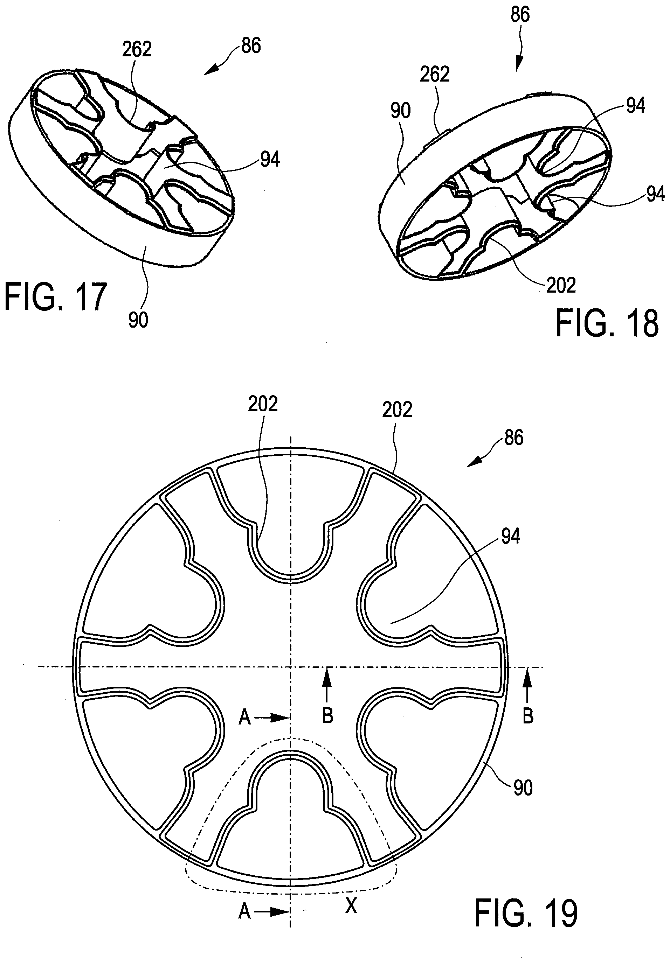

Fig. 17 und 18 zeigen einen Distanzisolierkörper 86 in einer perspektivischen Ansicht, der in Fig. 19 in einer axialen Draufsicht gezeigt ist. Im Grunde ähnelt der Distanzisolierkörper 86 dem Grenzisolierkörper 84, der in den Fig. 14 bis 16 gezeigt und erläutert wurde, wobei der Distanzisolierkörper 86 weder einen Isolationsscheibenabschnitt, noch eine Mantelöffnung aufweist. Der Distanzisolierkörper 86 dieser Ausführungsform ist zum Kombinieren mit einem Grenzisolierkörper 84 vorgesehen, wenn nämlich ein Schleifring auf den Isoliermantelabschnitt 88 des Grenzisolierkörpers 84 aufgeschoben werden soll, der eine axiale Ausdehnung hat, die größer ist als die axiale Ausdehnung des Isoliermantelabschnitts 88. In diesem Fall wird wenigstens ein Distanzisolierkörper 86 an den Grenzisolierkörper 84 angesetzt, nämlich so, dass der Distanzisolierkörper 86 mit seiner korrespondierenden umlaufenden Stufe 262 mit dem Grenzisolierkörper 84 im Bereich seiner umlaufenden Stufe 202 ineinander gesetzt wird. Der Isoliermantelabschnitt 88 verlängert sich somit um den Mantelabschnitt 90 des Distanzisolierkörpers. Sofern die axiale Länge hierbei noch nicht ausreicht, kann ein weiterer Distanzisolierkörper 86 an den bereits verwendeten Distanzisolierkörper 86 angesetzt werden. Hierfür wird dann die umlaufende Stufe 202 des einen Distanzisolierkörpers 86 an die korrespondierende umlaufende Stufe 262 des anderen, neu angesetzten Distanzisolierkörpers 86 angesetzt.

Zum elektrischen Anschließen einer Leitung reicht die Verwendung der Mantelöffnung 92 des Grenzisolierkörpers 84. Der Distanzisolierkörper 86 weist daher keine Öffnung in seinem Mantel 90 auf. Im Übrigen weist auch der Grenzisolierkörper 84 aufgrund seines Isolationsscheibenabschnitts 74 eine hohe Stabilität auf, die das Vorsehen der Mantelöffnungen 92 unterstützt, indem sie einem etwaigen Stabilitätsverlust durch diese Mantelöffnung 92 entgegenwirkt.

Obwohl sich wie beschrieben der Distanzisolierkörper 86 von dem Grenzisolierkörper 84 unterscheidet, weist er doch einige gleiche Elemente bzw. Abschnitte auf, nämlich die umlaufende Stufe 202 als auch die korrespondierende umlaufende Stufe 262 und auch die Leitungskanalabschnitte 94.

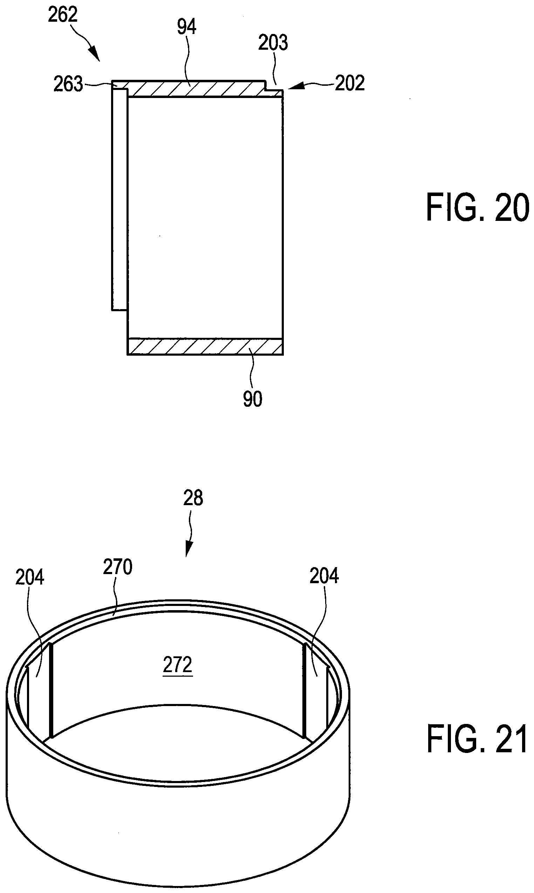

In Fig. 19 ist zudem ein Ausschnitt X gezeigt, von dem ein Schnitt A-A in Fig. 20 dargestellt ist. In der Schnittansicht ist somit ein Schnitt durch den Mantel 90 und den Leitungskanalabschnitt 94 dargestellt. Die Schnittansicht insbesondere des Leitungskanalabschnitts 94 verdeutlicht den Aufbau der umlaufenden Stufe 202 und der korrespondierenden umlaufenden Stufe 262. Gemessen an der axialen Ausdehnung des Mantels 90 wird somit die umlaufende Stufe 202 durch eine stufenförmige Vertiefung 203 gebildet und die korrespondierende umlaufende Stufe 262 wird durch eine stufenförmige Erhöhung 263 gebildet. Werden nun zwei Isolierkörper hier aneinandergesetzt, wird die stufenförmige Erhöhung 263 in die stufenförmige Vertiefung 203 eingesetzt.

Der Schleifring 28 der Fig. 21 entspricht dem in Fig. 8 dargestellten, wobei bisher keine Gewindeschweißbolzen angebracht sind. Außerdem können noch die fertigungstechnischen Details anders sein, wie beispielsweise die umlaufende Anphasung 270 der Fig. 21. Zum Zusammensetzen eines Schleifringübertragers, insbesondere eines Schleifringkörpers, ist der Schleifring 28 somit mit einer inneren Mantelfläche 272 versehen, die zum Ansetzen an einen Isoliermantelabschnitt 88 und/oder einem Mantelabschnitt 90 eines Grenzisolierkörpers 84 bzw. Distanzisolierkörpers 86 vorgesehen ist. Beziehungsweise die innere Mantelfläche 272 liegt bei Verwendung eines Grenzisolierkörpers gemäß Fig. 14 und Fig. 15 an den Mantelerhöhungen 260 an.

Je nach Größe des zu übertragenden Stroms und damit der zu übertragenden Leistung kann der Schleifring 28 unterschiedliche axiale Ausdehnungen aufweisen, also gemäß Fig. 21 unterschiedlich hoch ausfallen. Ansonsten ändert sich der Aufbau des Schleifrings 28 nicht. Entsprechend ist der Schleifring 28 durch ein Strangpressverfahren herstellbar und auf die gewünschte Länge kürzbar.

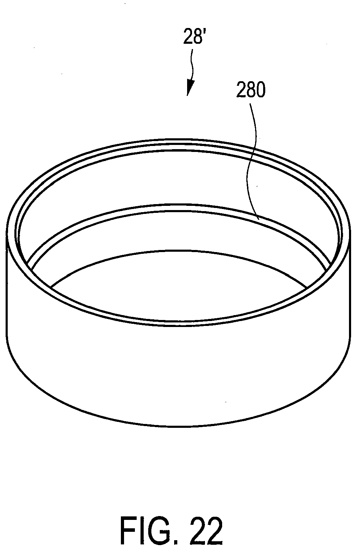

Fig. 22 zeigt einen speziellen Schleifring 28' für die Verbindung einer elektrischen Erde vom drehenden zum stehenden Teil des Schleifringübertragers und damit vom stehenden zum drehenden Teil der entsprechenden Anwendung bzw. umgekehrt. Dieser Schleifring 28' weist eine innere umlaufende Stufe 280 auf, und damit unterschiedlich starke Mantelbereiche. Der Schleifring 28', der auch als Erdschleifring 28' bezeichnet werden kann, wird benötigt, um Ausgleichsströme, die durch Potentiale im Spinner entstehen können, ableiten zu können, um zu vermeiden, dass diese über ein Lager fließen und dieses beschädigen.

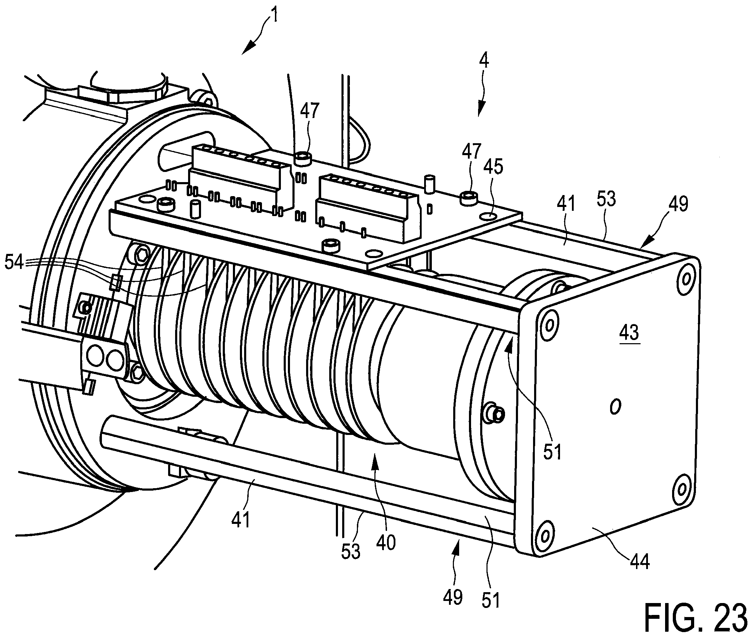

Fig. 23 zeigt einen Ausschnitt eines Schleifringübertragers 1, nämlich den Signalteil 4 des Schleifringübertragers 1. Der Signalteil 4 ist hierbei - im Gegensatz zur Darstellung der Fig. 4 - an dem Schleifringübertrager 1 montiert, allerdings in einem geöffneten Zustand, nämlich ohne Abdeckhaube. Es ist auch in Fig. 23 in der perspektivischen Darstellung der drehende Teil 40 und der stehende Teil 44 zu erkennen. Der stehende Teil 44 weist dabei vier Haltestreben 41 auf, um eine stabile Grundstruktur für den stehenden Teil 44 zu bilden. Über diese Haltestreben 41, die auch als Signalteilstreben 41 bezeichnet werden können, ist eine Stirnplatte 43 an dem übrigen Teil des Schleifringübertragers 1 befestigt. Der drehende Teil 40 dreht sich innerhalb dieser vier Signalteilstreben 41.

Zwei der Signalteilstreben 41, nämlich die in Fig. 23 oben liegend dargestellten, nehmen eine Signalteilplatine 45 auf, die die Elektronik bzw. Anschlusselemente und die Bürsten 54 aufnimmt. Die Signalteilplatine 45 ist dabei von oben auf diese beiden oberen Signalteilstreben 41 mit den Signalteilschrauben 47 aufgeschraubt. Die Signalteilstreben 41 weisen hierzu eine Befestigungsoberfläche 49 auf. Die Signalteilstreben 41 sind damit im Querschnitt etwa U-förmig, wobei das "U" geschlossen ist. Die Signalteilstreben 41 weisen also in einer Richtung eine ebene Fläche auf, die durch zwei Kanten 43 begrenzt ist, und zur dieser Fläche abgewandten Seite weisen diese Signalteilstreben jeweils eine Rundung 51 auf. Die Rundung 51 ist dabei im Wesentlichen zum drehenden Teil 40 gerichtet. Jedenfalls sind keine der Kanten 53 zum drehenden Teil 40 gerichtet. Somit wird eine gute Befestigungsmöglichkeit über diese Oberfläche geschaffen, gleichwohl sind etwaige Kanten, an denen die Gefahr eines elektrischen Überschlags am größten ist, nicht zum drehenden Teil 40 hin gerichtet, um dadurch eben besagte Überschläge zu vermeiden.

Die Streben des Signalteils 4 sind aus Aluminium stranggepresst. Dies wird grundsätzlich vorgeschlagen, nicht nur für die gezeigte Ausführungsform der Fig. 23 bzw. 4. Die Signalteilstreben 41 sind im Grunde identisch, wobei die Signalteilstreben 41, die in Fig. 23 oben gezeigt sind und die mit der Signalteilplatine 45 verbunden sind, gegenüber den anderen beiden Signalteilstreben 41 zusätzliche Bohrungen zur Aufnahme der Signalteilschrauben 47 aufweisen. Somit kann im Wesentlichen beim Strangpressverfahren eine Strebe hergestellt werden, die auf die gewünschte Länge abgelängt und mit der nötigen Bohrung versehen wird.

Die Kontur ist somit ein Vierkant mit Halbrund, so dass also von dem Vierkant nur zwei Kanten vorhanden sind. Eine solche Form ist aufwändig herzustellen, weil das Halbrund relativ viel Bearbeitung benötigt und eine schlechte Oberfläche am Halbrund entstehen würde, wenn die Bearbeitung bspw. durch entsprechendes Fräsen oder Feilen erfolgt. Aufgrund der beiden Kanten, ist die Ausbildung als Drehteil nicht möglich. Die Runden und auch die flache Fläche und die Kanten werden jedoch aus oben genannten Gründen benötigt. An Rundungen treten üblw. keine Feldstärkeüberhöhungen auf und deshalb treten Überschläge vorzugsweise an scharfkantigen Stellen auf. Das Halbrund bzw. die Rundungen des Halbrunds zeigt zu den spannungsführenden Schleifringen des drehenden Teils 40 und hier liegt ggf. ein Potential zwischen Schleifring und diesen geerdeten Signalteilstreben 41 an. Durch die Herstellung als Strangpressteil kann diese vorteilhafte Form, nämlich Querschnittform, dieser Signalteilstreben 41 hergestellt werden. Weiterhin wird durch das Herstellen durch Strangpressen eine Flexibilität in der Länge der Signalteilstreben 41 erreicht. Für Erweiterungen des Signalteils 4 können auf einfache Art und Weise die Signalteilstreben in der Länge variiert werden und somit auch größere Schleifringübertrager mit mehr Ringen im Signalteil realisiert werden.

Weiterhin wird durch das Strangpressverfahren eine gute Oberfläche erreicht. Insbesondere setzt sich ein Abrieb auf der Oberfläche nicht fest und Streben lassen sich leichter warten und reinigen.

Weiterhin ist es möglich im Vorgang des Strangpressens, nämlich beim Aluminiumstrangpressen wie hier vorgeschlagen wird, das Werkstück im Werk zu eloxieren, also die Oberfläche im Elektrobad zu oxidieren und so eine größere Oxidschicht einzustellen. Die Aluminium-Oxidschicht hat die nützliche Eigenschaft, elektrisch zu isolieren. Es können hierbei Schichtstärken bis zu 100 µm möglich werden. Vorzugsweise wird eine Schichtstärke von ca. 20 µm vorgeschlagen. Dies ist vorteilhaft, weil eine Schichtstärke von 15 µm bereits eine Durchschlagspannung von 500-600 V haben dürfte und somit eine Schichtstärke von 20 µm eine gute und ausreichende Isolierfähigkeit für dieses Signalteil 4 aufweist. Die Rohstreben, also die Signalteilstreben vor dem Eloxieren können mehrere Meter lang sein und können in diesem Zustand eloxiert werden. Dadurch ist der Vorgang des Eloxierens mit einem geringen bzw. unerheblichen Mehraufwand erzielbar.

Es wird somit ein verbesserter, zumindest veränderterer Schleifringübertrager vorgeschlagen, bei dem eine etwa sternförmige Welle vorgeschlagen wird. Diese ist besonders gut geeignet als Strangpressprofil und ist dadurch skalierbar und ermöglicht eine modulare Bauweise und damit auch eine Wiederverwendbarkeit. Die Art der Welle schafft Führungskanäle, wie beispielsweise die Führungskanäle 96, und kann damit eine Leitungsverlegung optimieren. Durch konkrete Bündelung bzw. Entbündelung von Leitungen kann auch eine Wärmeabfuhr verbessert werden. Ebenfalls verbessert sich die elektromagnetische Verträglichkeit, insoweit vorgeschlagen wird Signalleitungen im Zentralrohr der Welle zu verlegen, nämlich getrennt von Leistungskabeln.

Die vorgeschlagenen Isolierkörper ermöglichen eine modulare Bauweise und eine Skalierbarkeit. Insbesondere durch Verwendung unterschiedlich vieler, einschließlich gar keinem, Distanzisolierkörper ist eine modulare Bauweise möglich und die Isolierkörper brauchen im Grunde nur auf die Welle aufgesteckt zu werden. Durch korrespondierende umlaufende Stufen wird eine Isolierung zwischen Isolierkörpern verbessert, was auch etwaige Kriechstrecken für Ströme verringert oder ausschließt, da die Isolierkörper vollständig ineinander fassen können. Durch kleine Erhöhungen auf den Isolierkörpern oder zumindest einigen Isolierkörpern kann eine spielfreie Aufnahme der Schleifringe ermöglicht und dadurch ein Rundlauf verbessert werden, was auch die Lebensdauer erhöhen kann.

Schleifringe werden vorzugsweise über Gleitlagerbronzebuchsen als Halbzeug gefertigt, wobei etwaige Anschlussstücke zum Anschließen elektrischer Leitungen mit anpressbar sein können. Es sind grundsätzlich verschiedene Anschlusstechniken realisierbar. Durch die Verwendung der Gleitlagerbuchse als Halbzeug wird eine höhere Festigkeit der Schleifringe erreicht, was auch durch eine Fertigung mit Kaltverfestigung unterstützt wird. Als Ergebnis kann eine höhere Verschleißfestigkeit bei guten elektrischen Eigenschaften erzielt werden.

Zum Anschließen elektrischer Leitungen, insbesondere für große Querschnitte wie beispielsweise 35 mm², 50 mm² und 70 mm², werden verschiedene Varianten vorgeschlagen.

Eine Variante besteht darin, ein Anschlussstück anzulöten. Hierbei kann ein Anschlussstück an den Schleifring angelötet werden und dieses Stück kann in einer Führung wie beispielsweise einer Schwalbenschwanznut eingeführt und an einer definierten Position angelötet werden. In dieses Anschlussstück wird wiederum eine Leitung eingelegt und befestigt, wie beispielsweise angelötet.

Eine andere oder ergänzende Variante besteht darin, ein Anschlussstück mit anzupressen. Hierbei kann beispielsweise ein in der vorigen Variante beschriebenes Anschlussstück bei der Fertigung eines stranggezogenen Schleifrings mit angepresst werden. Hierdurch würde ein Lötvorgang eingespart.

Als noch weitere Variante wird eine Gleitlagerbuchse mit planen Anlageflächen versehen. Auf diese planen Anlageflächen kann nun ein Gewindeschweißbolzen mittels Lichtbogenschweißens aufgebracht werden. An diesen Gewindeschweißbolzen kann nun die jeweilige Leitung einfach mittels Kabelschub aufgelegt werden.

Weiterhin wird eine Schnittstelle zwischen Signalteil und Leistungsteil vorgeschlagen, die mit einer mechanischen Mitnehmervorrichtung versehen ist. Diese ist so ausgestaltet, dass ein Spannstift, der im Signalteil eingebracht bzw. vorgesehen ist, in eine Buchse des Leistungsteils eingeführt wird. Eine spielfreie Mitnahme wird durch einen Spannstift erreicht. Die Buchse ist als Verschleißteil ausgelegt und kann leicht getauscht werden, nämlich durch eine in einer entsprechenden Bohrung eingesetzte Hülse.

Außerdem wird vorgeschlagen, das Gehäuse des Leistungsteils mit Schnellspannverschlüsse bzw. Schnellverschlüssen zu verschließen, um eine zügige Wartung zu ermöglichen. Ein solcher Schnellverschluss kann zusätzlich noch die Funktion einer Abstandshalterung für Dichtungen beinhalten.

Ebenso wird die Verwendung vorgespannter Lager vorgeschlagen, die für eine definierte Lagerbelastung und eine erhöhte Lebensdauer und ebenso für eine spielfreie Lagerung sorgen.

Hierbei wird durch eine Tellerfeder eine vorbestimmte Vorspannung auf die Lager, insbesondere Wälzlager, gebracht, die die entsprechenden Wälzkörper wiederum in eine vorbestimmte Anordnung, nämlich eine so genannte "O-Anordnung", zwingen. Dadurch wird eine hohe Lagersteifigkeit erreicht, die sich durch geringe Verkippung und/oder hohe Momentenaufnahmefähigkeit auszeichnet. Eine solche hohe Lagersteifigkeit ist insbesondere für den Signalschleifring, also den Schleifring des Signalteils, und die dort untergebrachte Sensorik wichtig.

Außerdem wird für den Signalteil eine einseitige Lagerung vorgeschlagen. Hiermit ist die Gestaltung eines komplett abnehmbaren Gehäuses möglich, was eine gründliche und einfache Wartung ermöglicht. Vorgespannte Lager können auch hier für eine definierte Lagerbelastung und eine erhöhte Lebensdauer und ebenso für eine spielfreie Lagerung sorgen.

Es wird zudem vorgeschlagen, einzelne Schleifringe mit festgelegter axialer Ausdehnung, die je nach Betrachtungsweise auch als Länge oder Breite bezeichnet werden kann, vorzusehen. Diese Ausdehnungen können beispielsweise drei Varianten, also drei festgelegte axiale Ausdehnungen aufweisen, wie beispielsweise 29 mm, 54 mm und 79 mm. Diesen werden dabei entsprechend feste Stromtragfähigkeiten zugeordnet, nämlich im genannten Beispiel 150 A, 300 A bzw. 450 A.

Die Materialverwendung eines Gleitlagerhalbzeugs aus Bronze für die Schleifringe wird ebenfalls vorgeschlagen. Hierdurch ist ein im Grund aus anderen Bereichen gut bekanntes Material verwendbar. Die Stabilität kann hier entsprechend erhöht werden, bei akzeptabler elektrischer Eigenschaft.

Außerdem werden zwei verschiedene Isolierkörper vorgeschlagen, nämlich wie oben genannt ein Grenzisolierkörper und ein Distanzisolierkörper. Der Grenzisolierkörper ist zum Trennen von unterschiedlich potentialbehafteten Schleifringen zu verwenden, und ein Distanzisolierkörper, der mehrfach aufsteckbar ist, um verschieden breite Schleifringe aufzunehmen. Hierzu werden isolierte Kabelkanäle entlang der Welle bereitgestellt, nämlich insbesondere mittels der beschriebenen Leitungskanalabschnitte 94.

Hierfür wird eine wie die Isolierkörper profilierte Welle vorgeschlagen, die insbesondere stranggezogen wird.

Die Verbindung von Leitung zu Schleifring erfolgt vorzugsweise über Gewindeschweißbolzen, die mittels Lichtbogenschweißens angebracht werden.

Es ist somit ein modularer Leistungsteil durch unterschiedliche Anzahl von Schleifringen und Isolierkörpern erzielbar.

Ebenfalls wird eine Trennbarkeit des Signalteils vom Leistungsteil mittels Kupplung vorgeschlagen.

Insbesondere wird ein modulares System geschaffen, bei dem eine Leistungsschleifringanordnung und eine Signalschleifringanordnung über eine elektrische und mechanische Kupplung getrennt sind und zwei eigenständige Schleifringanordnungen darstellen. Es besteht zudem die Möglichkeit, mehrere interne Anschlüsse an einem Schleifring zu befestigen, um die verschieden großen Ströme zu übertragen. Hierzu können die entsprechenden Leitungen dem Schleifring durch mehrere Führungskanäle bzw. Leitungskanäle zugeführt werden und der entsprechende Isolierkörper, insbesondere Grenzisolierkörper, weist dafür mehrere Öffnungen, nämlich Mantelöffnungen, auf.

Verschiedene interne Leitungen, die insbesondere hinsichtlich Querschnitt und Anzahl unterschiedlich sein können, können durch ein einheitliches Anschlussstück an dem jeweiligen Ring angebracht werden.

Vorzugsweise wird ein Schleifring aus stranggezogenem Bronzehalbzeug, das auch als Gleitlagerbronze bekannt ist, hergestellt und kann auf die passende Ringbreite, also passende axiale Ausdehnung abgelängt werden.

Vorzugsweise wird eine stranggezogene Aluminiumwelle als Schleifringwelle vorgeschlagen, die sich passend der Anforderungen ablängen lässt.

Es wird zudem ein einheitlicher Kohlebürstenhalter zumindest für den Leistungsteil vorgeschlagen, der eine definierte Breite aufweist, so dass passend der geforderten Leistung ein entsprechender Schleifring bedient werden kann, dass also passend zu der geforderten Leistung der Kohlebürstenhalter an den entsprechenden Schleifring angepasst ist.

Durch die Verwendung von Kohlebürstenhaltern mit Tasche zur Aufnahme einer längeren Kohlebürste unter Verwendung einer Rollbandfeder um optimale Anpresskraft über das gesamte Anlagenleben zu gewährleisten, kann die Lebensdauer erhöht werden. Eine Lebensdauererhöhung kann ggf. ebenfalls durch die Verwendung vorgespannter Lagerungen erreicht werden, um optimale Abrollverhältnisse im Lager zu gewährleisten. Vorzugsweise werden Wälzlager mit höherer Fettfüllung verwendet, so dass Schmierung länger gewährleistet ist. Es wird dazu vorgeschlagen, ein Fett mit einem größeren Temperaturbereich zu verwenden, so dass extreme Temperaturen nicht zum Versagen des Fetts führen.

Außerdem wird vorgeschlagen, die Lagerstellen des Schleifringübertragers, insbesondere des Leistungsteils und/oder des Signalteils zu beheizen, um extremste Niedrigtemperaturen zu vermeiden. Eine solche Maßnahme ist insbesondere bei einer Verwendung in einer Windenergieanlage vorteilhaft, die in kalten Regionen aufgestellt wird oder zumindest in Regionen, die im Winter kalt werden können.

Ebenfalls zur Erhöhung der Lebensdauer trägt auch die Verwendung eines Schleifrings aus einem gezogenen Gleitlagerbuchsenmaterial bei, das kaltverfestigt ist, weil hierdurch eine höhere Verschleißfestigkeit aufgewiesen wird.

Eine bessere Wärmeverteilung und damit das Vermeiden zu hoher Temperaturen wird auch durch die Leitungsverlegung in der stranggezogenen Aluminiumwelle erreicht. Hierdurch liegt keine starke Bündelung vor, weil Leitungen des Leistungsteils in einzelnen Führungskanälen der Welle, insbesondere der stranggezogenen Aluminiumwelle geführt werden und dabei alleine oder in Kombination mit wenigen Leitungen zusammen in einem solchen Führungskanal laufen. Die Signalleitungen verlaufen gemeinsam in einem Zentralrohr und damit getrennt von den Leistungsleitungen des Leistungsteils. Bei den Signalleitungen im Zentralrohr kann noch von einer Bündelung die Rede sein, die aber insoweit jedenfalls hinsichtlich der Trennung von den Leistungsleitungen abgeschwächt ist. Zudem ist bei den Signalleitungen mit wenig Wärmeentwicklung zu rechnen.

Durch das vorgeschlagene Aneinanderreihen der Isolierkörper und dabei vollständiges Ineinanderschieben, aufgrund der umlaufenden Stufe und korrespondierenden umlaufenden Stufe, entstehen größere Kriechstrecken und dadurch eine verbesserte Isolation.

Die vorgeschlagene Variante, einen Gewindeschweißbolzen mittels Lichtbogen anzuschweißen, schafft eine Möglichkeit, bei der nur eine minimale Wärme in den Schleifring eingetragen wird. Ein zu großer Wärmeeintrag und damit ein Warmglühen, das die entsprechende kaltverfestigte Stelle lokal aufweichen könnte, wird vermieden.

Gemäß einem Vorschlag besitzt der Isolierkörper kleine Erhöhungen, insbesondere die beschriebenen Mantelerhöhungen 260, die sich beim Aufschieben des betreffenden Schleifrings so verformen können, dass der Schleifring spielfrei aufgenommen wird.

Weiterhin kann eine bessere Wartung durch Schnellspannverschlüsse bzw. Schnellverschlüsse erreicht werden, um dadurch Zugänge zu dem entsprechenden Bereich des Schleifringübertragers werkzeuglos und schnell öffnen zu können. Vorzugsweise ist das Signalteil einseitig gelagert, um das Gehäuse rundherum zugänglich zu machen bzw. das Gehäuse vollständig abnehmen zu können. Es kann eine wartungsfreundliche Bauweise ermöglicht werden.

Eine Mitnahme zwischen Signalteil und Leistungsteil, wodurch der Leistungsteil seine Drehbewegung auf den Signalteil überträgt, erfolgt vorzugsweise mittels einer austauschbaren Buchse, nämlich einer in eine Bohrung eingesetzten Hülse. Sollte sich hier ein Verschleiß einstellen, kann diese Buchse bzw. Hülse leicht ausgetauscht werden.

## Patentansprüche

1. Schleifringkörper (72) eines Schleifringübertragers (1) zum Übertragen elektrischer Signale zwischen einem stehenden und einem um eine Drehachse drehenden Teil, umfassend
- wenigstens einen Schleifring (28) zum Übertragen eines der elektrischen Signale zwischen dem Schleifring (28) und wenigstens einem darauf schleifenden Schleifelement, insbesondere Bürste und
- eine Schleifringwelle (8) zum Befestigen des wenigstens einen Schleifrings (28) darauf,
wobei die Schleifringwelle (8) über ihren Umfang verteilte Führungskanäle (96) zum Aufnehmen elektrischer Leitungen zum elektrischen Anschließen des wenigstens einen Schleifrings (28) aufweist,
**dadurch gekennzeichnet, dass** die Schleifringwelle (8) ein Profil aufweist und ein Isolierkörper (84, 86) ein an das Profil der Schleifringwelle (8) angepasstes Gegenprofil aufweist, so dass der Isolierkörper mit seinem Gegenprofil axial entlang des Profils der Schleifringwelle (8) auf die Schleifringwelle (8) aufgeschoben werden kann und dabei das Profil und das Gegenprofil so ineinander greifen, dass sich eine im Wesentlichen drehfeste Verbindung ergibt.

2. Schleifringkörper (72) nach Anspruch 1, **dadurch gekennzeichnet, dass** die Schleifringwelle (8) und/oder der wenigstens eine Schleifring (28) durch ein Strangpressverfahren oder Strangziehverfahren hergestellt ist.

3. Schleifringkörper (72) nach Anspruch 1 oder 2, **dadurch gekennzeichnet, dass** die Schleifringwelle (8) sich radial nach außen erstreckende Streben (240) mit jeweils dazwischen liegenden Nuten (96) aufweist, insbesondere wenigstens 3, vorzugsweise wenigstens 6 Streben (240) aufweist, die insbesondere identisch sind und/oder gleichmäßig in Umfangsrichtung verteilt sind, insbesondere, dass die Welle (8) in einem Schnitt quer zur Drehachse etwa sternförmig ausgebildet ist und/oder dass die Schleifringwelle (8) zum Führen weiterer elektrischer Leitungen eine Durchgangsbohrung (18) mit einer mit der Drehachse übereinstimmenden Längsachse aufweist.

4. Schleifringkörper (72) nach einem der vorstehenden Ansprüche, **dadurch gekennzeichnet, dass** wenigstens ein auf die Schleifringwelle (8) aufschiebbarer Isolierkörper (84, 86) vorgesehen ist, um zwei Schleifringe (28) gegeneinander elektrisch zu isolieren, und/oder um einen Schleifring (28) gegen die Schleifringwelle (8) elektrisch zu isolieren, und/oder um wenigstens eine elektrische oder wenigstens eine der elektrischen Leitungen isoliert in den Führungskanälen (96) zu führen.

5. Schleifringkörper (72) nach einem der vorstehenden Ansprüche, **dadurch gekennzeichnet, dass** mehrere Isolierkörper (84, 86) mit gleichen Querschnitten aber unterschiedlicher Länge bzw. unterschiedlicher axialer Ausdehnung vorgesehen sind und/oder mehrere Isolierkörper (84, 86) zum passgenauen Aneinandersetzen auf der Schleifringwelle (8) vorgesehen sind, wobei vorzugsweise die Isolierkörper (84, 86) gestufte Kanten (202) zum Ansetzen an korrespondierend gestufte Kanten (262) eines benachbarten Isolierkörpers (84, 86) aufweisen.

6. Schleifringkörper (72) nach einem der vorstehenden Ansprüche, **dadurch gekennzeichnet, dass** wenigstens einer der Isolierkörper (84, 86) als Grenzisolierkörper (84) zum elektrischen Isolieren wenigstens eines Schleifrings (28) in radialer und in axialer Richtung vorgesehen ist, und/oder dass wenigsten einer der Isolierkörper (84, 86) als Distanzisolierkörper (86) zum elektrischen Isolieren wenigstens eines Schleifrings (28) nur in radialer Richtung vorgesehen ist, wobei der Distanzisolierkörper (86) insbesondere in axialer Richtung zwischen zwei Grenzisolierkörpern (84) angeordnet ist.

7. Schleifringkörper (72) nach einem der vorstehenden Ansprüche, **dadurch gekennzeichnet, dass** mehrere Isolierkörper (84, 86) auf der Schleifringwelle (8) zusammengesetzt sind und gemeinsam wenigstens einen axialen Leitungskanal (98) bilden, zum Führen einer der wenigstens einen elektrischen Leitung zum elektrischen Anschließen jeweils eines Schleifrings (28), wobei der wenigstens eine Leitungskanal (98) durch die Isolierkörper (84, 86) elektrisch gegen die übrigen Schleifringe (28) und/oder gegen die Schleifringwelle (8) isoliert ist und insbesondere jeweils in einem Führungskanal (96) verläuft.

8. Schleifringkörper (72) nach einem der vorstehenden Ansprüche, **dadurch gekennzeichnet, dass** wenigstens eine Erhebung (260) auf einem äußeren Zylinderabschnitt wenigstens eines Isolierkörpers (84, 86) vorgesehen sind, um einen festen Sitz eines auf diesen Zylinderabschnitt aufgeschobenen Schleifrings (28) zu erreichen und/oder dass mehrere, identische, gegeneinander austauschbare Schleifringe (28) und/oder mehrere, identische, gegeneinander austauschbare Isolierkörper (84, 86) vorgesehen sind, insbesondere auf die Schleifringwelle (8) aufgeschoben sind.

9. Schleifringkörper (72) nach einem der vorstehenden Ansprüche, **dadurch gekennzeichnet, dass** der Schleifring (28) aus einem Gleitlagerhalbzeug aus Bronze gefertigt ist, insbesondere stranggezogen oder stranggepresst ist.

10. Schleifringkörper (72) nach einem der vorstehenden Ansprüche, **dadurch gekennzeichnet, dass** zum Befestigen einer elektrischen Anschlussleitung der wenigstens eine Schleifring (28) einen Gewindeschweißbolzen (26) aufweist, ein an den Schleifring (28) angelötetes Anschlussstück aufweist und/oder der Schleifring (28) stranggezogen ist und ein beim Strangziehen angepresstes Anschlussstück aufweist.

11. Schleifringkörper (72) nach einem der vorstehenden Ansprüche, **dadurch gekennzeichnet, dass** in axialer Richtung mehrere Schleifringabschnitte vorhanden sind, und jeder Schleifringabschnitt jeweils eine galvanisch verbundene Einheit bildet und Schleifringabschnitte unterschiedlicher axialer Größe unterschiedlich viele Schleifringe gleicher Größe aufweisen, so dass die jeweilige axiale Größe des jeweiligen Schleifringabschnitts durch die Anzahl der jeweils verwendeten Schleifringe erreicht wird und/oder unterschiedlich viele Isolierkörper (84, 86), insbesondere unterschiedlich viele Distanzisolierkörper (86) gleicher Größe vorhanden sind.

12. Schleifringübertrager (1) zum Übertragen elektrischer Signale zwischen einem stehenden und einem um eine Drehachse drehenden Teil, umfassend einen Schleifringkörper (72) nach einem der vorstehenden Ansprüche.

13. Schleifringübertrager (1) nach Anspruch 12, **dadurch gekennzeichnet, dass** ein Signalteilabschnitt (4) und ein Leistungsteilabschnitt (2) vorhanden sind und der Signalteilabschnitt (4) und der Leistungsteilabschnitt (2) jeweils einen festen und einen dazu drehbar gelagerten Abschnitt aufweisen und die beiden drehbar gelagerten Abschnitte vorzugsweise über ein Kuppelelement (36, 38) trennbar so miteinander verbunden sind, dass eine Drehbewegung des einen drehbar gelagerten Abschnitts über das Kuppelelement auf den anderen drehbar gelagerten Abschnitt übertragen wird und dass insbesondere das Kuppelelement an dem Leistungsteil (2) als Mitnehmerbuchse (38) zum Aufnehmen eines korrespondierenden, am Signal teil vorhandenen Mitnehmerstiftes (36) ausgebildet ist.

14. Schleifringübertrager (1) nach einem der Ansprüche 12 oder 13, **dadurch gekennzeichnet, dass** das Leistungsteil (2) ein mittels Schnellverschlüssen verschlossenes Gehäuse aufweist und/oder dass wenigstens eines der drehbar gelagerten Abschnitte mittels wenigstens eines vorgespannten Lagers (10, 42) gelagert ist.

15. Windenergieanlage (100) mit einer Gondel (104) und einem relativ zur Gondel (104) drehbar gelagerten aerodynamischen Rotor (106), umfassend einen Schleifringübertrager (1) nach einem der Ansprüche 12 bis 14.

## Claims

1. Slip ring assembly (72) of a slip ring transmitter (1) for transmitting electrical signals between a static part and a part rotating around a rotation axis, including
- at least one slip ring (28) for transmitting one of the electrical signals between the slip ring (28) and at least one rubbing element, specifically brushes and
- a slip ring shaft (8) to fix the minimum one slip ring (28) to,
whereby the slip ring shaft (8) has guide channels (96) distributed around its circumference to take electrical cables in order to electrically connect at least one slip ring (28),
**characterized in that** the slip ring shaft (8) has a profile and the insulating body (84, 86) has a counter profile adapted to the slip ring shaft (8) profile, so that the insulating body and its counter profile can be moved in an axial direction along the profile of the slip ring shaft (8) on the slip ring shaft (8), and the profile and counter profile mesh in such a way that there is a torque-proof connection.

2. Slip ring assembly (72) according to Claim 1, **characterized in** the slip ring shaft (8) and/or at least one slip ring (28) is manufactured by extrusion or pultrusion.

3. Slip ring assembly (72) according to Claims 1 or 2, **characterized in that** the slip ring shaft (8) has radial supports (240) stretching outwards, with grooves (96) lying between each one, specifically that there are 3, and preferably at least 6 braces (240), which specifically are identical and/or are uniformly distributed in a circumferential direction, specifically that the shaft (8) section across the rotation axis will be roughly star-shaped and/or that the slip ring shaft (8) for guiding other electrical cables has a through-hole (18) with a longitudinal axis which matches the rotational axis.

4. Slip ring assembly (72) according to one of the preceding claims, **characterized in that** at least one of the movable insulating bodies (84, 86) of the slip ring shaft (8) is provided to insulate two slip ring assemblies (28) from one another electrically, and/or in order to electrically insulate a slip ring (28) from the slip ring shaft (8), and/or to feed at least one electrical, or at least one of the electrical cables, in an insulated manner into the guide channels (96).

5. Slip ring assembly (72) according to one of the preceding claims, **characterized in that** multiple insulating bodies (84, 86) with identical cross-sections but differing lengths or differing axial dimensions are used and/or multiple insulating bodies (84, 86) are intended to mesh together tightly on the slip ring shaft (8), whereby the insulating body (84, 86) has stepped edges (202) to fit with the correspondingly stepped edges (262) of an adjacent insulating body (84, 86).

6. Slip ring assembly (72) according to one of the preceding claims, **characterized in that** at least one of the insulating bodies (84, 86) is used as a marginal insulating body (84) to electrically insulate at least one slip ring (28) in a radial and in an axial direction, and/or that at least one of the insulating bodies (84, 86) is used as a spacer insulating body (86) to electrically insulate at least one slip ring (28) but only in a radial direction, such that the spacer insulating body (86) is specifically configured in an axial direction between two marginal insulating bodies (84).

7. Slip ring assembly (72) according to one of the preceding claims, **characterized in that** multiple insulating bodies (84, 86) on the slip ring shaft (8) are juxtaposed, and in combination form at least one axial cable duct (98), to feed one of the at least one electrical cables to electrically connect one slip ring (28), such that the at least one cable duct (98) is insulated by the insulating body (84, 86) from the other slip rings (28), and/or from the slip ring shaft (8), and specifically runs inside a guide channel (96).

8. Slip ring assembly (72) according to one of the preceding claims, **characterized in that** at least one ridge (260) on one external cylinder section is designed with at least one insulating body (84, 86), in order to achieve a firm seat for one of the slip rings (28) pushed onto this cylinder section and/or that several identical interchangeable slip rings (28), and/or several identical interchangeable insulating bodies (84, 86) are used, specifically pushed onto the slip ring shaft (8).

9. Slip ring assembly (72) according to one of the preceding claims, **characterized in that** the slip ring (28) is made from a bronze slide bearing semi-finished product, and is specifically pultruded or extruded.

10. Slip ring assembly (72) according to one of the preceding claims, **characterized in that** it has a threaded weld stud to attach an electrical connector cable from at least one slip ring (28), has a soldered connector on the slip ring (28) and/or the slip ring (28) is extruded and has a connector pressed on during extrusion.

11. Slip ring assembly (72) according to one of the preceding claims, **characterized in that** there are several slip ring assemblies in the axial direction, and that each slip ring section should each form a galvanically connected unit, and that slip ring sections of different axial dimensions have many different slip rings of the same size, so that each axial dimension of each slip ring section can be achieved by the number of slip rings used, and/or different multiple insulating bodies, specifically different multiple spacer insulating bodies of the same dimension are present.

12. Slip ring transmitter (1) to transmit electrical signals between a static part and a part rotating around a rotation axis, including a slip ring assembly (72) according to one of the preceding claims.

13. Slip ring transmitter (1) according to Claim 12, **characterized in that** there is a signal unit section (4) and a power unit section (2), and the signal unit section (4) and the power unit section (2) each have a fixed mounted section which can be rotated, and both of these mounted rotatable sections are preferably connected via a coupling element (36, 38) in such a way that they can be separated, such that a rotating movement in one of the rotatable mounted sections can be transmitted to the other rotatable mounted section via the coupling element and that in particular the coupling element on the power unit (2) is designed as a tappet bushing (38) to hold a corresponding, partially available drive pin (36) on the signal unit.

14. Slip ring transmitter (1) according to one of the Claims 12 or 13, **characterized in that** the power unit (2) has a housing closed by quick release fasteners and/or at least one of the mounted rotatable sections is mounted using at least one pre-stressed bearing (10, 42).

15. Wind turbine (100) with a nacelle (104) and aerodynamic rotor (106) mounted such that it can rotate relative to the nacelle (104), including a slip ring transmitter (1) according to one of the Claims 12 to 14.

## Revendications

1. Corps de bague collectrice (72) d'un transmetteur à bague collectrice (1) pour la transmission de signaux électriques entre une partie fixe et une partie tournant autour d'un axe de rotation, comprenant
- au moins une bague collectrice (28) pour la transmission d'un des signaux électriques entre la bague collectrice (28) et au moins un élément collecteur collectant sur celle-ci, en particulier un balai et
- un arbre de bague collectrice (8) pour la fixation d'au moins une bague collectrice (28) sur celui-ci,
dans lequel l'arbre de bague collectrice (8) présente des canaux de guidage (96) répartis sur sa périphérie pour la réception de câbles électriques pour le raccordement électrique d'au moins une bague collectrice (28),
**caractérisé en ce que** l'arbre de bague collectrice (8) présente un profil et un corps isolant (84, 86) présente un profil antagoniste adapté au profil de l'arbre de bague collectrice (8) de sorte que le corps isolant puisse être enfilé avec son profil antagoniste axialement le long du profil de l'arbre de bague collectrice (8) sur l'arbre de bague collectrice (8) et le profil et le profil antagoniste se mettent en prise l'un dans l'autre de sorte qu'il résulte un raccordement sensiblement solidaire en rotation.

2. Corps de bague collectrice (72) selon la revendication 1, **caractérisé en ce que** l'arbre de bague collectrice (8) et/ou l'au moins une bague collectrice (28) est fabriqué(e) par un procédé d'extrusion ou un procédé d'extrusion étirage.

3. Corps de bague collectrice (72) selon la revendication 1 ou 2, **caractérisé en ce que** l'arbre de bague collectrice (8) présente des nervures (240) s'étendant radialement vers l'extérieur avec respectivement des rainures (96) se trouvant au milieu, en particulier présente au moins 3, de préférence au moins 6 nervures (240) qui sont en particulier identiques et/ou sont réparties uniformément dans le sens périphérique, en particulier **en ce que** l'arbre (8) est réalisé, dans une coupe transversalement à l'axe de rotation, à peu près en forme d'étoile et/ou **en ce que** l'arbre de bague collectrice (8) présente, pour le guidage d'autres câbles électriques, un perçage débouchant (18) avec un axe longitudinal concordant avec l'axe de rotation.

4. Corps de bague collectrice (72) selon l'une des revendications précédentes, **caractérisé en ce qu'**au moins un corps isolant (84, 86) enfilable sur l'arbre de bague collectrice (8) est prévu afin d'isoler électriquement deux bagues collectrices (28) l'une par rapport à l'autre, et/ou d'isoler électriquement une bague collectrice (28) par rapport à l'arbre de bague collectrice (8), et/ou de guider au moins un câble électrique ou au moins un des câbles électriques de manière isolée dans les canaux de guidage (96).

5. Corps de bague collectrice (72) selon l'une des revendications précédentes, **caractérisé en ce que** plusieurs corps isolants (84, 86) sont prévus avec des sections transversales identiques mais de différentes longueurs ou différentes extensions axiales et/ou plusieurs corps isolants (84, 86) sont prévus pour le placement précis en ajustage l'un sur l'autre sur l'arbre de bague collectrice (8), dans lequel de préférence les corps isolants (84, 86) présentent des arêtes étagées (202) pour le placement sur des arêtes (262) étagées de manière correspondante d'un corps isolant (84, 86) contigu.

6. Corps de bague collectrice (72) selon l'une des revendications précédentes, **caractérisé en ce qu'**au moins un des corps isolants (84, 86) est prévu comme corps isolant limite (84) pour l'isolation électrique d'au moins une bague collectrice (28) dans le sens radial et dans le sens axial et/ou **en ce qu'**au moins un des corps isolants (84, 86) est prévu comme corps isolant d'écartement (86) pour l'isolation électrique d'au moins une bague collectrice (28) seulement dans le sens radial, dans lequel le corps isolant d'écartement (86) est agencé en particulier dans le sens axial entre deux corps isolants limites (84).

7. Corps de bague collectrice (72) selon l'une des revendications précédentes, **caractérisé en ce que** plusieurs corps isolants (84, 86) sont réunis sur l'arbre de bague collectrice (8) et forment ensemble au moins un canal de câble axial (98), pour le guidage d'un de l'au moins un câble électrique pour le raccordement électrique respectivement d'une bague collectrice (28), dans lequel l'au moins un canal de câble (98) est isolé électriquement par les corps isolants (84, 86) par rapport aux autres bagues collectrices (28) et/ou par rapport à l'arbre de bague collectrice (8) et en particulier s'étend respectivement dans un canal de guidage (96).

8. Corps de bague collectrice (72) selon l'une des revendications précédentes, **caractérisé en ce qu'**au moins une élévation (260) est prévue sur une section cylindrique extérieure d'au moins un corps isolant (84, 86) afin d'atteindre un siège fixe d'une bague collectrice (28) enfilée sur cette section cylindrique et/ou **en ce que** plusieurs bagues collectrices (28) identiques remplaçables l'une par l'autre et/ou plusieurs corps isolants (84, 86) identiques, remplaçables l'un par l'autre, sont prévus, en particulier sont enfilés sur l'arbre de bague collectrice (8).

9. Corps de bague collectrice (72) selon l'une des revendications précédentes, **caractérisé en ce que** la bague collectrice (28) est fabriquée en un demi-produit de palier lisse en bronze, en particulier est extrudée étirée ou extrudée.

10. Corps de bague collectrice (72) selon l'une des revendications précédentes, **caractérisé en ce que**, pour la fixation d'un câble de raccordement électrique, l'au moins une bague collectrice (28) présente un boulon fileté soudé (26), présente une pièce de raccordement brasée sur la bague collectrice (28) et/ou la bague collectrice (28) est extrudée étirée et présente une pièce de raccordement pressée lors de l'extrusion étirage.

11. Corps de bague collectrice (72) selon l'une des revendications précédentes, **caractérisé en ce que**, dans le sens axial, plusieurs sections de bague collectrice sont présentes, et chaque section de bague collectrice forme respectivement une unité raccordée par voie galvanique et des sections de bague collectrice de différentes grandeurs axiales présentent de nombreuses bagues collectrices différentes de même grandeur de sorte que la grandeur axiale respective de la section de bague collectrice respective soit atteinte par le nombre des bagues collectrices respectivement utilisées et/ou de nombreux corps isolants différents (84, 86) sont présents, en particulier de nombreux corps isolants d'écartement différents (86) de même grandeur.

12. Transmetteur à bague collectrice (1) pour la transmission de signaux électriques entre une partie fixe et une partie tournant autour d'un axe de rotation, comprenant un corps de bague collectrice (72) selon l'une des revendications précédentes.

13. Transmetteur à bague collectrice (1) selon la revendication 12, **caractérisé en ce qu'**une section de partie de signal (4) et une section de partie de puissance (2) sont prévues et la section de partie de signal (4) et la section de partie de puissance (2) présentent respectivement une section fixe et une section logée de manière rotative par rapport à celle-ci et les deux sections logées de manière rotative sont raccordées de manière séparable l'une à l'autre de préférence par le biais d'un élément de couplage (36, 38) de sorte qu'un mouvement de rotation de l'une section logée de manière rotative soit transmis par le biais de l'élément de couplage à l'autre section logée de manière rotative et **en ce qu'**en particulier l'élément de couplage est réalisé sur la partie de puissance (2) comme douille d'entraînement (38) pour la réception d'une tige d'entraînement (36) correspondante, présente partiellement sur le signal.

14. Transmetteur à bague collectrice (1) selon l'une des revendications 12 ou 13, **caractérisé en ce que** la partie de puissance (2) présente un boîtier fermé à l'aide de fermetures rapides et/ou **en ce qu'**au moins une des sections logées de manière rotative est logée à l'aide d'au moins un palier précontraint (10, 42).

15. Eolienne (100) avec une nacelle (104) et un rotor (106) aérodynamique logé de manière rotative relativement à la nacelle (104), comprenant un transmetteur à bague collectrice (1) selon l'une des revendications 12 à 14.
